(19) Europäisches Patentamt / European Patent Office / Office européen des brevets

(11) **EP 4 503 366 A1**

(12) **EUROPEAN PATENT APPLICATION**
published in accordance with Art. 153(4) EPC

(43) Date of publication:
**05.02.2025 Bulletin 2025/06**

(21) Application number: **23778030.9**

(22) Date of filing: **24.03.2023**

(51) International Patent Classification (IPC):
**H02J 3/38** *(2006.01)*   **H02J 3/01** *(2006.01)*

(52) Cooperative Patent Classification (CPC):
**Y02E 10/76**

(86) International application number:
**PCT/CN2023/083595**

(87) International publication number:
**WO 2023/185661 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2022   CN 202210320230**

(71) Applicant: **Shanghai Zhonglv New Energy Technology Co., Ltd.**
**Shanghai 201199 (CN)**

(72) Inventors:
• **CAI, Xu**
  **Shanghai 200240 (CN)**
• **WANG, Han**
  **Shanghai 200240 (CN)**
• **QIN, Yao**
  **Shanghai 200240 (CN)**
• **DENG, Zhenyan**
  **Shanghai 200240 (CN)**
• **CAO, Yunfeng**
  **Shanghai 200240 (CN)**
• **ZHANG, Chen**
  **Shanghai 200240 (CN)**
• **YANG, Renxin**
  **Shanghai 200240 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **CONTROL SYSTEM FOR SELF-SYNCHRONIZING VOLTAGE SOURCE FULL-POWER CONVERSION WIND TURBINE GENERATOR**

(57)     Disclosed is a control system for a self-synchronized voltage source full power conversion wind power generation unit, including: a start control module, configured to implement non-impact current flexible grid-connected start control; a steady state control module, configured to implement voltage source control in a non-fault state of a power grid; a transient state control module, configured to implement voltage source control in a fault state of the power grid; a steady state and transient state switching module, configured to seamlessly switch between a steady state operation mode and a transient state operation mode; an asymmetrical current control module, configured to implement negative-sequence current control under an asymmetrical power grid; a harmonic current control module, configured to implement harmonic current control under a background harmonic power grid; and a grid impedance adaptive control module, configured to implement grid impedance adaptive control in power grid access scenarios at different short-circuit ratios.

FIG. 1

**Description**

**TECHNICAL FIELD**

The present invention relates to the technical field of electric engineering, and particularly relates to a control system for a self-synchronized voltage source full power conversion wind power generation unit. The present invention particularly relates to a control system for a self-synchronized voltage source full power conversion wind power generation unit, and a control method therefor.

**BACKGROUND**

At present, an electric power system presents a characteristic that the capacity ratio of new energy resources is improved while the capacity ratio of the synchronous machine is decreased. Therefore, new energy resources based on a power electronic converter need to be converted from a role of outputting electric energy passively to a role of supporting a power grid actively. Relying on a characteristic that the power electronic converter is flexible and controllable, a voltage source control policy where a mathematical model which simulates operating characteristics of the synchronous machine is embedded into the converter is widely proposed, which has natural advantages in supporting the frequency of the power grid and the voltage actively.

A voltage source wind power generation unit can achieve autonomic rapid support of frequency and voltage of the power grid, which is critical equipment to construct a novel power system. A control method based on a dynamic condition of direct current bus capacitance performs power grid synchronization and frequency response for autonomic perception of the frequency of the power grid through the direct current bus voltage, which is an effective method to implement the voltage source wind power generation unit. However, in a case that the voltage of the power grid fails, limited by the output power of the grid side converter, stable control of the direct current voltage cannot be implemented, and the grid side converter is out of a synchronizing function. Besides, without the current inner loop, a transient state overcurrent problem easily occurs in the voltage source control method based on the dynamic condition of the direct current bus capacitance to make the wind power generation unit quit operation. In a case that three-phase voltages are imbalanced in the power grid, the grid-connected current is imbalanced, resulting in secondary fluctuation of the direct current voltage, the grid-connected active power, and the reactive power. In a case that the power grid contains background harmonic waves, the content of the harmonic waves of the grid-connected current exceeds the standard. Therefore, with respect to power grid fault control and protection of the voltage source wind power generation unit based on the control method for the dynamic condition of the direct current bus capacitance, it is needed to comprehensively consider overcurrent limitation of the converter during the fault period, grid synchronization, and grid synchronization problem when the fault is recovered and consider problems such as negative-sequence current control of the grid-connected converter, secondary fluctuation inhibition of the direct current voltage, double frequency component inhibition of the active power and the reactive power, harmonic current inhibition in a case that the power grid is imbalanced and contains the background harmonic waves.

A patent literature (application No.: CN201811124760.8) discloses a control method and system for a full power wind power generation unit. The method includes: controlling a direct current side voltage by using a grid side converter, and controlling captured wind power by using a unit side converter, where the unit side converter uses a vector control mode based on rotor flux orientation. The direct current side voltage of the converter is in analogy with a rotating speed of a rotor of a synchronous generator, an inertia time constant of the direct current side capacitance is in analogy with an inertia time constant of the rotor of the synchronous generator, and a modulation ratio of the grid side converter is in analogy with a flux linkage of the synchronous generator. For the full power conversion wind power generation unit, this patent provides a control method for synchronization by perceiving a frequency of a power grid by a direct current bus voltage. However, the direct current bus voltage cannot be maintained at a constant value, and has a problem that the distortion factor of the grid side output current as there is no current inner loop. Moreover, this patent only analyzes the steady state characteristics for the full power wind power generation unit and is lack of a control method when the power grid has a transient state fault.

A patent literature (application No.: CN202010769555.8) discloses a virtual synchronous control method and system for a double-fed wind power generation unit. The method includes: subjecting collected stator voltage three-phase alternating current signal and stator output current three-phase alternating current signal of a double-fed generator to improved virtual synchronous control to obtain a stator voltage instruction and a stator virtual synchronous angle frequency instruction of the double-fed generator; calculating a rotating angular speed of a rotor and the stator virtual synchronous angle frequency instruction of the double-fed generator to obtain a positive-sequence slip angle and a negative-sequence slip angle of the double-fed generator; and performing positive-sequence control and negative-sequence control on the positive-sequence slip angle, negative-sequence slip angle, and the stator voltage instruction to generate an SVPWM control signal of a switch tube of a rotor side converter of the double-fed generator. For the double-fed wind power generation unit, this patent provides improved virtual synchronous control of the double-fed generator. However, the mentioned control method is only used in the unit side converter, and a voltage source control method for the grid side converter is not involved. For the double-fed wind power generation unit, this patent provides a virtual synchronous machine control policy at an imbalanced grid voltage, and a control method when the power grid has the transient state fault is not involved.

## SUMMARY

To overcome defects in the prior art, an object of the present invention is to provide a control system for a self-synchronized voltage source full power conversion wind power generation unit.

A control system for a self-synchronized voltage source full power conversion wind power generation unit provided according to the present invention, including:

a start control module, configured to implement non-impact current flexible grid-connected start control of the self-synchronized voltage source full power conversion wind power generation unit; a steady state control module, configured to implement voltage source control of the full power conversion wind power generation unit in a non-fault state of a power grid; a transient state control module, configured to implement voltage source control of the full power conversion wind power generation unit in a fault state of the power grid; a steady state and transient state switching module, configured to seamlessly switch between a steady state operation mode and a transient state operation mode of the self-synchronized voltage source full power conversion wind power generation unit; an asymmetrical current control module, configured to implement negative-sequence current control of the full power conversion wind power generation unit under an asymmetrical power grid; a harmonic current control module, configured to implement harmonic current control of the full power conversion wind power generation unit under a background harmonic power grid; and a grid impedance adaptive control module, configured to implement grid impedance adaptive control of the full power conversion wind power generation unit in power grid access scenarios at different short-circuit ratios.

A start control method for a grid side converter of a self-synchronized voltage source full power conversion wind power generation unit provided according to the present invention, including the following steps:

step 2.1: connecting a breaker $BRK_1$, charging a direct current side capacitor through a pre-charging resistor $R_c$ and a diode rectifier of a grid side converter, disconnecting the $BRK_1$ after a direct current side voltage reaches a preset value, disconnecting a pre-charging circuit, and connecting a breaker $BRK_2$;

step 2.2: placing switches S1, S2, and S3 at a preset position 1, enabling a drive pulse $S_g$ of the grid side converter, and in this case, respectively setting a modulating voltage and a phase angle of the grid side converter as:

$$\begin{cases} U_t = U_{t0} \\ \theta_{vsc} = \theta_p \end{cases}$$

where $U_t$ is an amplitude of the modulating voltage of the grid side converter, $\theta_{vsg}$ is a phase angle of the modulating voltage of the grid side converter of the wind power generation unit; $U_{t0}$ is an amplitude of an outlet voltage of the grid side converter of the wind power generation unit; and $\theta_p$ is a phase angle of the outlet voltage of the grid side converter of the wind power generation unit;

step 2.3: placing the switch S1 at a position 2, and the switches S2 and S3 at the position 1, inputting a difference between an actual value and a reference value of the direct current voltage into a direct current voltage controller 1, taking a sum of an output of the direct current voltage controller 1 and an output phase of a phase-locked loop as a phase of the modulating voltage 1 of the grid side converter, and in this case, respectively setting the modulating voltage and the phase angle of the grid side converter as:

$$\begin{cases} U_t = U_{t0} \\ \theta_{vsg} = \theta_p + \left( k_{pdc1} + \dfrac{k_{idc1}}{s} \right)\left( U_{dc} - U_{dcref} \right) \end{cases}$$

where $k_{pdc1}$ and $k_{idc1}$ are respectively a proportionality coefficient and an integration coefficient of the direct current voltage controller 1;

step 2.4: in a case that the direct current voltage reaches the set value, placing the switches S2 and S3 at the preset position 2, and inputting a deviation between an actual value and a given value of a direct current bus voltage into a voltage regulator 2 of the direct current bus to obtain a synchronous phase angle 2 of the grid side converter, where an implementing formula of a control policy is as follows:

$$\theta_{vsg} = \frac{1 + T_1 s}{s(1 + T_2 s)}(U_{dc} - U_{dcref})$$

where $\theta_{vsg}$ is the synchronous phase angle 2 of the grid side converter; and $T_1$ and $T_2$ are time constants of the direct current voltage regulator;

step 2.5: subjecting the deviation between the actual value and the given value of the direct current bus voltage to a stabilizing controller to obtain a stabilizing control compensation quantity of the output voltage of the converter, inputting a difference between a given value of reactive power and an actual value of the reactive power into a reactive power regulator, and adding an output of the reactive power regulator with a voltage reference value and the stabilizing control compensation quantity to obtain an amplitude of the output voltage 2 of the converter, where an implementing formula of the control policy is as follows:

$$\begin{cases} U_t = U_{t0} + \left(k_{pq} + \dfrac{k_{iq}}{s}\right)(Q_{gref} - Q_g) + D_{pss} \\ D_{pss} = k_{pss}(U_{dc} - U_{dcref}) \end{cases}$$

where $Q_{gref}$ and $Q_g$ are respectively an instruction value and an actual value of the reactive power; $D_{pss}$ is the stabilizing control compensation quantity of the output voltage of the grid side converter; $k_{pss}$ is a stabilizing control coefficient; and $k_{pq}$ and $k_{iq}$ are respectively a proportionality coefficient and an integration coefficient of the reactive power regulator;

where the instruction value of the reactive power is obtained by the difference between the given value and the actual value of the amplitude of an output alternating current voltage of the power grid converter through an alternating current voltage regulator, and an expression thereof is as follows:

$$Q_{gref} = k_{pu}\left(U_0 - U_{om}\right)$$

where $U_o$ is the given value of the amplitude of the output alternating current voltage of the grid side converter; $U_{om}$ is the actual value of the amplitude of the output alternating current voltage of the grid side converter; and $k_{pu}$ is a proportionality coefficient of the alternating current voltage regulator; and

step 2.6: obtaining a three-phase voltage value under a static coordinate system from the instruction value $U_t$ and the synchronous phase angle $\theta_{vsg}$ of the modulating voltage of the grid side converter, and subjecting the three-phase voltage value to pulse width vector modulation to obtain a trigger signal $S_g$ of the grid side converter.

A steady state control method for a grid side converter of a self-synchronized voltage source full power conversion wind power generation unit provided according to the present invention, including a steady state control method for a grid side converter of a wind power generation unit, a steady state control method for a unit side converter of the wind power generation unit, and a primary frequency modulation control method for a wind power generation unit.

A steady state control method for a grid side converter of a self-synchronized voltage source full power conversion wind power generation unit provided according to the present invention, including the following steps:

step 4.1: inputting a three-phase alternating current voltage $U_{oabc}$ and a three-phase alternating current $I_{fabc}$ of an output port of the grid side converter, and the synchronous angle $\theta_{vsg}$ of the grid side converter into a rotational coordinate transformation formula to obtain a d axis component and a q axis component of inputs of the three-phase alternating current voltage $U_{oabc}$ and the three-phase alternating current $I_{fabc}$, and calculating real-time values of instantaneous active power $P_g$ and reactive power $Q_g$ of the grid side converter according to the three-phase alternating current voltage $U_{oabc}$ and a three-phase alternating current $I_{fabc}$;

step 4.2: inputting a deviation between an actual value and a given value of a direct current bus voltage into a direct current bus voltage regulator, and adding the output of the direct current voltage regulator and an angle frequency reference value of the power grid to obtain a synchronous angle frequency of the grid side converter, where an implementing formula of a control policy is as follows:

$$\omega_{syn} = \omega_0 + G(s)(U_{dc} - U_{dcref})$$

where $\omega_{syn}$ is the synchronous angle frequency of the grid side converter; $\omega_0$ is a rated value of the angle frequency of the power grid; $T_1$ and $T_2$ are time constants of the direct current voltage regulator; $U_{dc}$ and $U_{dcref}$ are the actual value and the given value of the direct current bus voltage; and $G(s)$ is a transfer function of the direct current bus voltage regulator, and an expression thereof is as follows:

$$G(s) = \frac{1 + T_1 s}{s(1 + T_2 s)}$$

step 4.3: integrating the synchronous angle frequency of the grid side converter to obtain a synchronous phase angle $\theta_{vsg}$ of the grid side converter, where an expression thereof is as follows:

$$\theta_{vsg} = \frac{1}{s} \omega_{syn}$$

step 4.4: subjecting the deviation $\Delta U_{dc}$ between the actual value and the given value of the direct current bus voltage to a stabilizing controller to obtain a stabilizing control compensation quantity of the output voltage of the converter, where an implementing formula thereof is as follows:

$$D_{pss} = k_{pss}(U_{dc} - U_{dcref})$$

where $k_{pss}$ is a stabilizing control coefficient;

step 4.5: subjecting the difference between the given value and the actual value of an amplitude of an output alternating current voltage of the power grid converter to an alternating current voltage regulator to obtain an instruction value of a reactive power, where an expression of a control policy is as follows:

$$Q_{gref} = k_{pu}\left(U_0 - U_{om}\right)$$

where $U_o$ is the given value of the amplitude of the output alternating current voltage of the grid side converter; $U_{om}$ is the actual value of the amplitude of the output alternating current voltage of the grid side converter; and $k_{pu}$ is a proportionality coefficient of the alternating current voltage regulator; and

step 4.6: inputting a difference between a given value of the reactive power and an actual value of the reactive power into a reactive power regulator, and adding the output of the reactive power regulator with a voltage reference value and the stabilizing control compensation quantity to obtain an amplitude of an output voltage reference value of the converter, where an implementing formula of the control policy is as follows:

$$U_t = U_{t0} + \left(k_{pq} + \frac{k_{iq}}{s}\right)(Q_{gref} - Q_g) + D_{pss}$$

where $U_t$ is the amplitude of the output voltage reference value of the grid side converter; $U_{t0}$ is an amplitude of a rated voltage of the power grid; $k_{pq}$ and $k_{iq}$ are respectively a proportionality coefficient and an integration coefficient of the reactive power regulator; $Q_{gref}$ and $Q_g$ are respectively an instruction value and an actual value of the reactive power; and $D_{pss}$ is the stabilizing control compensation quantity of the output voltage of the grid side converter;

step 4.7: using the amplitude of the output voltage reference value of the grid side converter as a d axis instruction value of an output voltage inner loop, setting a q axis instruction value of the output voltage inner loop of the grid side converter as 0, subjecting a difference between the d axis instruction value and an actual value of the d axis voltage of the voltage inner loop of the grid side converter to a virtual impedance link to obtain a d axis current instruction, and subjecting a difference between the q axis instruction value and the q axis voltage of the voltage inner loop of the grid side converter to the virtual impedance link to obtain a q axis current instruction, where an implementing formula of the control policy is as follows:

$$\begin{cases} I_{dref} = \dfrac{U_{td} - U_{od}}{L_v s + R_v} \\[2mm] I_{qref} = \dfrac{U_{tq} - U_{oq}}{L_v s + R_v} \end{cases}$$

where $U_{td}$ and $U_{tq}$ are respectively the d axis and q axis instruction values of the voltage inner loop of the grid side converter, and there are $U_{td} = U_t$ and $U_{tq} = 0$; $U_{od}$ and $U_{oq}$ are respectively d axis and q axis voltages of a port of the grid side converter; $I_{dref}$ and $I_{qref}$ are respectively d axis and q axis current instruction values; and $L_v$ and $R_v$ are respectively a virtual inductance and a virtual resistance value of the virtual impedance link;

step 4.8: subjecting a difference between the d axis instruction value and the d axis current of a current inner loop of the grid side converter to a PI regulator to obtain a d axis modulating voltage instruction value, subjecting a difference between the q axis instruction value and the q axis current of the current inner loop of the grid side converter to the PI regulator to obtain a q axis modulating voltage instruction value, where an implementing formula of a control policy is as follows:

$$\begin{cases} U_{std} = (k_{pi} + \dfrac{k_{ii}}{s})(I_{dIref} - I_{fd}) - \omega_g L_f I_{fq} + U_{od} \\ U_{stq} = (k_{pi} + \dfrac{k_{ii}}{s})(I_{qIref} - I_{fq}) + \omega_g L_f I_{fd} + U_{oq} \end{cases}$$

where $U_{std}$ and $U_{stq}$ are respectively the d axis and q axis modulating voltage instruction values; $I_{fd}$ and $I_{fq}$ are respectively the d axis and q axis currents outputted by the grid side converter; $L_f$ is converter side filter inductance; $\omega_g$ is the angle frequency of the power grid; and $k_{pi}$ and $k_{ii}$ are respectively a current loop proportion and an integration coefficient; and

step 4.9: subjecting the instruction value of the modulating voltage of the grid side converter to a synchronous phase angle $\theta_{vsg}$ to obtain a three-phase voltage value under a static coordinate system, and subjecting the three-phase voltage value to pulse width vector modulation to obtain a trigger signal of the grid side converter.

A steady state control method for a unit side converter of a self-synchronized voltage source full power conversion wind power generation unit provided according to the present invention, including the following steps:

step 5.1: inputting a three-phase alternating current $I_{sabc}$ outputted by the unit side converter and a rotor angle $\theta_r$ of a generator into a rotational coordinate transformation formula to obtain a d axis component and a q axis component inputted by the three-phase alternating current $I_{sabc}$, and calculating real-time values of instantaneous active power $P_s$ and reactive power $Q_s$ of the unit side converter according to a three-phase alternating current voltage $U_{sabc}$ and a three-phase alternating current $I_{sabc}$;

step 5.2: looking up a rotating speed-power table according to a current rotating speed of a wind turbine to obtain a maximum output power $P_{WT}$ of the wind power generation unit, subjecting a difference between a synchronous angle frequency outputted by a grid side converter and a rated angle frequency of the power grid to a proportional-resonant controller to obtain inertia response power $\Delta P$ of the unit side converter, so as to further obtain a power instruction value of the wind power generation unit, where an implementing formula of the power instruction value is as follows:

$$P_{sref} = P_{WT} - \Delta P = P_{WT} + \left( k_c + \frac{2k_s \xi \omega_c s}{s^2 + 2\xi \omega_c s + \omega_c{}^2} \right)\left( \omega_{syn} - \omega_0 \right)$$

where $P_{sref}$ is a reference value of a power link; $P_{WT}$ is the maximum output power of the wind power generation unit; $\Delta P$ is the inertia response power; $k_c$ is a proportionality coefficient of the proportional-resonant controller; $k_s$ is a gain of the proportional-resonant controller at a resonant frequency; $\xi$ is a damping coefficient of the proportional-resonant controller; and $\omega_c$ is a resonant angle frequency;

step 5.3: inputting a difference between a given value of reactive power and an actual value of the reactive power of the unit side converter into a reactive power regulator, and using an output value of the active power regulator as a q axis current instruction value of the unit side converter, where an implementing formula of a control policy is as follows:

$$I_{sqref} = \left( k_{pp} + \frac{k_{ip}}{s} \right)(P_{sref} - P_s)$$

where $P_{sref}$ and $P_s$ are respectively the instruction value and the actual value of the output power of the wind power generation unit; and $k_{pp}$ and $k_{ip}$ are the proportionality coefficient and an integration coefficient of the reactive power regulator;

step 5.4: subjecting a difference between the d axis instruction value and the d axis actual value of a current inner loop of the unit side converter to a PI regulator to obtain a d axis modulating voltage instruction value, subjecting a difference between the q axis instruction value and the q axis actual value of the current inner loop of the unit side converter to the PI regulator to obtain a q axis modulating voltage instruction value, where an implementing formula of a control policy is as follows:

$$
\begin{cases}
U_{\mathrm{sd}} = (k_{\mathrm{pi\_m}} + \dfrac{k_{\mathrm{ii\_m}}}{s})(I_{\mathrm{sdref}} - I_{\mathrm{sd}}) - n_{\mathrm{p}}\omega_{\mathrm{m}}L_{\mathrm{sq}}I_{\mathrm{sq}} \\[3mm]
U_{\mathrm{sq}} = (k_{\mathrm{pi\_m}} + \dfrac{k_{\mathrm{ii\_m}}}{s})(I_{\mathrm{sqref}} - I_{\mathrm{sq}}) + n_{\mathrm{p}}\omega_{\mathrm{m}}L_{\mathrm{sd}}I_{\mathrm{sd}} + n_{\mathrm{p}}\omega_{\mathrm{m}}\psi_{\mathrm{r}}
\end{cases}
$$

where $U_{\mathrm{sd}}$ and $U_{\mathrm{sq}}$ are respectively d axis and q axis modulating voltage instruction values; $I_{\mathrm{sd}}$ and $I_{\mathrm{sq}}$ are respectively d axis and q axis currents outputted by the unit side converter; $L_{\mathrm{sd}}$ and $L_{\mathrm{sq}}$ are d axis and q axis inductance of the generator; $\omega_{\mathrm{m}}$ is a mechanical angle frequency of a rotor of the generator; $n_{\mathrm{p}}$ is a number of pole-pairs of the generator; $\psi_{\mathrm{r}}$ is a rated flux linkage of the generator; and $k_{\mathrm{pi\_m}}$ and $k_{\mathrm{ii\_m}}$ are a current loop proportion and an integration coefficient of the unit side converter; and

step 5.5: subjecting the modulating voltage instruction value of the unit side converter and the rotor angle $\theta_{\mathrm{r}}$ to rotational coordinate inverse transformation to obtain a three-phase voltage value under a static coordinate system, and subjecting the three-phase voltage value to pulse width vector modulation to obtain a trigger signal of the unit side converter.

A primary frequency modulation control method for a self-synchronized voltage source full power conversion wind power generation unit provided according to the present invention, including the following steps:

step 6.1: inputting a difference between an actual value and instruction value of an active power of the wind power generation unit into a power controller to obtain a pitch angle set value, where an implementing formula of a control policy is as follows:

$$
\beta_{\mathrm{s}} = (k_{\mathrm{ppj}} + \frac{k_{\mathrm{ipj}}}{s})(P_{\mathrm{s}} - P_{\mathrm{sref}})
$$

where $\beta_{\mathrm{s}}$ is the pitch angle set value; $P_{\mathrm{sref}}$ and $P_{\mathrm{s}}$ are respectively the instruction value and the actual value of the active power of the wind power generation unit; a compensation value; and $k_{\mathrm{ppj}}$ and $k_{\mathrm{ipj}}$ are a proportionality coefficient and an integration coefficient of the power controller;

step 6.2: inputting a difference between a synchronous angle frequency outputted by the grid side converter and the rated angle frequency of the power grid into a primary frequency modulation regulator, and adding an output of the primary frequency modulation regulator and the pitch angle preset set to obtain a pitch angle compensation value, where an implementing formula of a control policy is as follows:

$$
\Delta\beta = \beta_0 + k_{\mathrm{pb}}\left(\omega_{\mathrm{syn}} - \omega_0\right)
$$

where $\beta_0$ is the pitch angle set value; $\Delta\beta$ is the pitch angle compensation value; and $k_{\mathrm{pb}}$ is a proportionality coefficient of the primary frequency modulation controller; and

step 6.3: sending a sum of the pitch angle set value and the pitch angle compensation value as a pitch angle instruction value to a variable pitch controller to control the pitch angle of the wind power generation unit to realize a primary frequency modulation function of the unit.

A transient state modulation control method for a self-synchronized voltage source full power conversion wind power generation unit provided according to the present invention, including the following steps:

step 7.1: in a case that a direct current voltage is greater than $k_{\mathrm{a}} * U_{\mathrm{dcref}}$, an unloading circuit acting, controlling a direct current bus voltage by using a PI regulator, and comparing an output value of the regulator with a PWM generator to generate a high frequency pulse signal to control the unloading circuit to work, where an implementing formula of a control policy is as follows:

$$u_{\mathrm{cp}} = (k_{\mathrm{pc}} + \frac{k_{\mathrm{ic}}}{s})(U_{\mathrm{dc}} - k_{\mathrm{a}}U_{\mathrm{dcref}})$$

where $u_{\mathrm{cp}}$ is an output of an unloading circuit controller; $k_{\mathrm{pc}}$ and $k_{\mathrm{ic}}$ are respectively an unloading control loop proportionality coefficient and an integration coefficient; and $k_{\mathrm{a}}$ is a direct current voltage unloading action coefficient; step 7.2: inputting a difference between an instruction value and an actual value of an active power into a virtual synchronous controller, adding an output of the virtual synchronous controller with an angle frequency reference value to obtain an output angle frequency of the grid side converter, and integrating the output angle frequency of the grid side converter to obtain asynchronous phase angle of the grid side converter, where an implementing formula of a control policy is as follows:

$$\begin{cases} \omega_{\mathrm{syn}} = \omega_0 + \dfrac{1}{Js + D}(P_{\mathrm{ref}} - P_{\mathrm{g}}) \\ \theta_{\mathrm{syn}} = \dfrac{1}{s}\omega_{\mathrm{syn}} \end{cases}$$

where $P_{\mathrm{ref}}$ and $P_{\mathrm{g}}$ are respectively the instruction value and the actual value of the active power; and $J$ and $D$ are respectively a virtual inertia and a virtual damping;
step 7.3: inputting a difference between a given value of reactive power and an actual value of the reactive power into a reactive power regulator, and adding an output of a reactive power regulator with a voltage reference value to obtain an amplitude of an output voltage reference value of a converter, where an implementing formula of a control policy is as follows:

$$U_{\mathrm{t}} = U_0 + \left(k_{\mathrm{pq}} + \frac{k_{\mathrm{iq}}}{s}\right)(Q_{\mathrm{gref}} - Q_{\mathrm{g}})$$

step 7.4: subjecting an error between the d axis and q axis instruction values and the actual values of output voltages of the grid side converter to an adaptive virtual impedance link to obtain the d axis and q axis instruction values of output currents of the grid side converter, where an expression of the adaptive virtual impedance link is as follows:

$$\begin{cases} L_{\mathrm{v\_ft}} = \dfrac{\sqrt{I_{\mathrm{dref}}^2 + I_{\mathrm{qref}}^2}}{I_{\mathrm{lim}}} L_{\mathrm{v}} \\ R_{\mathrm{v\_ft}} = \dfrac{\sqrt{I_{\mathrm{dref}}^2 + I_{\mathrm{qref}}^2}}{I_{\mathrm{lim}}} R_{\mathrm{v}} \end{cases}$$

$L_{\mathrm{v\_ft}}$ and $R_{\mathrm{v\_ft}}$ are respectively a virtual inductance value and a virtual resistance value of the adaptive virtual impedance link;
step 7.5: obtaining an expression of the d axis and q axis instruction values of the output currents of the grid side converter in the adaptive virtual impedance link as follows:

$$I_{\mathrm{dlref}} = \begin{cases} I_{\mathrm{dref}}\dfrac{I_{\mathrm{lim}}}{\sqrt{I_{\mathrm{dref}}^2 + I_{\mathrm{qref}}^2}}, & \sqrt{I_{\mathrm{dref}}^2 + I_{\mathrm{qref}}^2} > I_{\mathrm{lim}} \\ I_{\mathrm{dref}}, & \sqrt{I_{\mathrm{dref}}^2 + I_{\mathrm{qref}}^2} \leq I_{\mathrm{lim}} \end{cases}$$

$$I_{\mathrm{qlref}} = \begin{cases} I_{\mathrm{qref}}\dfrac{I_{\mathrm{lim}}}{\sqrt{I_{\mathrm{dref}}^2 + I_{\mathrm{qref}}^2}}, & \sqrt{I_{\mathrm{dref}}^2 + I_{\mathrm{qref}}^2} > I_{\mathrm{lim}} \\ I_{\mathrm{qref}}, & \sqrt{I_{\mathrm{dref}}^2 + I_{\mathrm{qref}}^2} \leq I_{\mathrm{lim}} \end{cases}$$

where $I_{\mathrm{dlref}}$ and $I_{\mathrm{qlref}}$ are respectively d axis and q axis current instruction values after amplitude limitation; and $I_{\mathrm{lim}}$ is a

maximum allowed output current amplitude;

step 7.6: setting an instruction value of an apparent power and the instruction value of the active power according to a drop depth of a voltage of the power grid, where an expression of the apparent power instruction value is as follows:

$$S_{new} = \frac{3\sqrt{2}}{2} U_{orms} \sqrt{I_{dlref}^2 + I_{qlref}^2}$$

where $S_{new}$ is the maximum apparent power that can be sent in a fault period; and $U_{orms}$ is an effective value of a voltage of a port of the wind power generation unit; and
an expression of the instruction value of the active power is as follows:

$$P_{gref} = \sqrt{S_{new}^2 - Q_{gref}^2}$$

step 7.7: shielding, by the unit side converter, an inertia response function during a transient fault of the power grid, where the power of the wind power generation unit is obtained by looking up a rotating speed-power table according to a current rotating speed of the wind turbine.

A transient state and steady state switch control method for a self-synchronized voltage source full power conversion wind power generation unit provided according to the present invention, including the following steps:

step 8.1: in a case that an alternating current voltage fault incident $F_1$ and a direct current voltage abnormal incident $F_2$ are detected at the same time and a transient state and steady state switch control signal FT of the self-synchronized voltage source full power conversion wind power generation unit, executing a fault ride-through control policy, where a fault signal $F_1$ is used to judge an alternating current voltage fault, and an expression is as follows:

$$F_1 = \begin{cases} 1, U_{orms} < a_1 U_m \\ 0, U_{orms} > a_2 U_m \end{cases}$$

where $a_1$ and $a_2$ are respectively logical determining proportionality factors of the alternating current voltage;
the fault signal $F_2$ is used to determine a direct current voltage abnormality, where an expression is as follows:

$$F_2 = \begin{cases} 1, U_{dc} > b_1 U_{dc0} \\ 0, U_{dc} < b_2 U_{dc0} \end{cases}$$

where $b_1$ and $b_2$ are respectively logical determining proportionality factors of the alternating current voltage;
the transient state and steady state switch control signal FT is integrally generated by the fault signals $F_1$ and $F_2$:

$$FT = F_1 \& F_2$$

step 8.2: in a case that the transient state and steady state control signal FT is invalid, using a direct current voltage in a synchronization link for synchronization; in a case that the transient state and steady state switch control signal FT is valid, using a power synchronous control mode in the synchronization link; performing switching in the synchronization link of the grid side converter at a synchronous frequency position to guarantee that an output phase angle of the grid side converter does not mutate, to effectively avoid an impact in the switch process, where an implementing formula of a control policy is as follows:

$$\omega_{syn} = \begin{cases} \dfrac{1+T_1 s}{s(1+T_2 s)}(U_{dc} - U_{dcref}) + \omega_0, FT = 0 \\ \dfrac{1}{Js+D}(P_{gref} - P_g) + \omega_0, FT = 1 \end{cases}$$

step 8.3: in a case that the transient state and steady state switch control signal FT is invalid, determining that the stabilizing control compensation amount added to the modulating voltage of the grid side converter is valid; in a case that the transient state and steady state switch control signal *FT* is valid, determining that the stabilizing control compensation amount added to the modulating voltage of the grid side converter is 0, that is, the stabilizing control compensation amount is only used to improve the stability of a control system of the grid side converter in the steady state, which is 0 in the transient state, and an implementing formula of a control policy is as follows:

$$D_{\mathrm{pss}} = \begin{cases} k_{\mathrm{pss}}\left(U_{\mathrm{dc}} - U_{\mathrm{dcref}}\right), FT = 0 \\ 0, \qquad FT = 1 \end{cases}$$

step 8.4: in a case that the transient state and steady state switch control signal *FT* is invalid, responding, by the wind power generation, to a power grid frequency incident, where the inertia response function is valid; in a case that the transient state and steady state switch control signal *FT* is valid, skipping responding, by the wind power generation unit, to a power grid frequency incident, where an additional inertia response power is 0, that is, the frequency response control link of the unit side converter is locked in a transient operation mode, and an implementing formula of inertia response control is as follows:

$$\Delta P = \begin{cases} \left(k_{\mathrm{c}} + \dfrac{2k_{\mathrm{s}}\omega_{\mathrm{a}}s}{s^2 + 2\omega_{\mathrm{a}}s + \omega^2}\right)\left(\omega_{\mathrm{syn}} - \omega_0\right), FT = 0 \\ 0, \qquad FT = 1 \end{cases}$$

An asymmetrical output current control method for a self-synchronized voltage source full power conversion wind power generation unit provided according to the present invention, including the following steps:

step 9.1: using a synchronous phase angle of a grid side converter as a conversion angle, using one-quarter delay method to obtain a positive-sequence component and a negative-sequence component of a three phase alternating voltage and a three phase alternating current of the wind power generation unit;

step 9.2: obtaining a virtual active power and reactive power of the grid side converter through the d and q axis current instruction values $I_{\mathrm{dlref}}$ and $I_{\mathrm{qlref}}$ of the grid side converter after amplitude limitation and the d axis component and q axis component $U_{\mathrm{od}}$ and $U_{\mathrm{oq}}$ of the alternating current voltage of the wind power generation unit, and filtering out a double frequency component through a low-pass filter to obtain an instruction value $P_{\mathrm{oref}}$ of an active power and an instruction value $Q_{\mathrm{oref}}$ of a reactive power, where a calculating formula is as follows:

$$\begin{cases} P_{\mathrm{oref}} = \dfrac{1}{1 + T_3 s}\left(U_{\mathrm{od}}I_{\mathrm{dlref}} + U_{\mathrm{oq}}I_{\mathrm{qlref}}\right) \\ Q_{\mathrm{oref}} = \dfrac{1}{1 + T_3 s}\left(U_{\mathrm{oq}}I_{\mathrm{dlref}} - U_{\mathrm{od}}I_{\mathrm{qlref}}\right) \end{cases}$$

where $T_3$ is a time constant of the low-pass filter;

step 9.3: according to the active power instruction value and the reactive power instruction value, a positive-sequence d axis component and a positive-sequence q axis component $U_{\mathrm{odp}}$ and $U_{\mathrm{oqp}}$ and a negative-sequence d axis component and a negative-sequence q axis component $U_{\mathrm{odn}}$ and $U_{\mathrm{oqn}}$ of the alternating current voltage of the wind power generation unit, obtaining instruction values $I_{\mathrm{dpref}}$, $I_{\mathrm{qpref}}$, $I_{\mathrm{dnref}}$, and $I_{\mathrm{qnref}}$ of the positive-sequence and negative-sequence currents respectively according to control targets of inhibiting the negative-sequence current, fluctuation at a double frequency of the active power, and fluctuation at a double frequency of the reactive power;

under the control target of inhibiting the negative-sequence current, a calculating formula for the instruction value of the positive-sequence and negative-sequence currents is as follows:

$$\begin{bmatrix} I_{\mathrm{dpref}} \\ I_{\mathrm{qpref}} \\ I_{\mathrm{dnref}} \\ I_{\mathrm{qnref}} \end{bmatrix} = \frac{2}{3\left(U_{\mathrm{odp}}^2 + U_{\mathrm{oqp}}^2\right)} \begin{bmatrix} U_{\mathrm{oqp}} & -U_{\mathrm{odp}} & 0 & 0 \\ U_{\mathrm{odp}} & U_{\mathrm{oqp}} & 0 & 0 \\ 0 & 0 & 0 & 0 \\ 0 & 0 & 0 & 0 \end{bmatrix} \begin{bmatrix} P_{\mathrm{oref}} \\ Q_{\mathrm{oref}} \\ 0 \\ 0 \end{bmatrix}$$

under the control target of inhibiting the fluctuation at the double frequency of the active power, a calculating formula of the instruction value of the positive and negative-sequence current is as follows:

$$\begin{bmatrix} I_{\mathrm{dpref}} \\ I_{\mathrm{qpref}} \\ I_{\mathrm{dnref}} \\ I_{\mathrm{qnref}} \end{bmatrix} = \frac{2P_{\mathrm{oref}}}{3D_1} \begin{bmatrix} U_{\mathrm{odp}} \\ U_{\mathrm{oqp}} \\ -U_{\mathrm{odn}} \\ -U_{\mathrm{oqn}} \end{bmatrix} + \frac{2Q_{\mathrm{oref}}}{3D_2} \begin{bmatrix} U_{\mathrm{oqp}} \\ -U_{\mathrm{odp}} \\ U_{\mathrm{oqn}} \\ -U_{\mathrm{odn}} \end{bmatrix}$$

under the control target of inhibiting the fluctuation at the double frequency of reactive power, a calculating formula of the instruction value of the positive-sequence and negative-sequence currents is as follows:

$$\begin{bmatrix} I_{\mathrm{dpref}} \\ I_{\mathrm{qpref}} \\ I_{\mathrm{dnref}} \\ I_{\mathrm{qnref}} \end{bmatrix} = \frac{2P_{\mathrm{oref}}}{3D_2} \begin{bmatrix} U_{\mathrm{odp}} \\ U_{\mathrm{oqp}} \\ U_{\mathrm{odn}} \\ U_{\mathrm{oqn}} \end{bmatrix} + \frac{2Q_{\mathrm{oref}}}{3D_1} \begin{bmatrix} U_{\mathrm{oqp}} \\ -U_{\mathrm{odp}} \\ -U_{\mathrm{oqn}} \\ U_{\mathrm{odn}} \end{bmatrix}$$

where

$$\begin{cases} D_1 = U_{\mathrm{odp}}^2 + U_{\mathrm{oqp}}^2 - U_{\mathrm{odn}}^2 - U_{\mathrm{oqn}}^2 \\ D_2 = U_{\mathrm{odp}}^2 + U_{\mathrm{oqp}}^2 + U_{\mathrm{odn}}^2 + U_{\mathrm{oqn}}^2 \end{cases}$$

step 9.4: subjecting a difference between the positive-sequence d axis instruction value and the d axis current of a current inner loop of the grid side converter to a PI regulator to obtain an instruction value of a positive-sequence d axis modulating voltage, and subjecting a difference between the positive-sequence q axis instruction value and the q axis current of the current inner loop of the grid side converter to the PI regulator to obtain an instruction value of the positive-sequence d axis modulating voltage, where an implementing formula of a control policy is as follows:

$$\begin{cases} U_{\mathrm{tdp}} = (k_{\mathrm{pi\_p}} + \dfrac{k_{\mathrm{ii\_p}}}{s})(I_{\mathrm{dpref}} - I_{\mathrm{fdp}}) - \omega_{\mathrm{g}} L_{\mathrm{f}} I_{\mathrm{fqp}} + U_{\mathrm{odp}} \\ U_{\mathrm{tqp}} = (k_{\mathrm{pi\_p}} + \dfrac{k_{\mathrm{ii\_p}}}{s})(I_{\mathrm{qpref}} - I_{\mathrm{fqp}}) + \omega_{\mathrm{g}} L_{\mathrm{f}} I_{\mathrm{fdp}} + U_{\mathrm{oqp}} \end{cases}$$

where $U_{\mathrm{tdp}}$ and $U_{\mathrm{tqp}}$ are respectively instruction values of the positive-sequence d axis and q axis modulating voltage; $I_{\mathrm{fdp}}$ and $I_{\mathrm{fqp}}$ are respectively the positive-sequence d axis and q axis currents outputted by the grid side converter; $L_{\mathrm{f}}$ is the converter side filter inductance; $\omega_{\mathrm{g}}$ is the angle frequency of the power grid; $k_{\mathrm{pi\_p}}$ and $k_{\mathrm{ii\_p}}$ are respectively the proportionality coefficient and the integration coefficient of the positive-sequence current loop;

step 9.5: subjecting the difference between the negative-sequence d axis instruction value and the d axis current of the current inner loop of the grid side converter to the PI regulator to obtain the instruction value of the negative-sequence d axis modulating voltage, and subjecting the difference between the negative-sequence q axis instruction and the q axis current of the current inner loop of the grid side converter to the PI regulator to obtain the instruction value of the negative-sequence q axis modulating voltage, where an implementing formula of a control policy is as follows:

$$\begin{cases} U_{\mathrm{tdn}} = (k_{\mathrm{pi\_n}} + \dfrac{k_{\mathrm{ii\_n}}}{s})(I_{\mathrm{dnref}} - I_{\mathrm{fdn}}) - \omega_{\mathrm{g}} L_{\mathrm{f}} I_{\mathrm{fqn}} + U_{\mathrm{odn}} \\ U_{\mathrm{tqn}} = (k_{\mathrm{pi\_n}} + \dfrac{k_{\mathrm{ii\_n}}}{s})(I_{\mathrm{qnref}} - I_{\mathrm{fqn}}) + \omega_{\mathrm{g}} L_{\mathrm{f}} I_{\mathrm{fdn}} + U_{\mathrm{oqn}} \end{cases}$$

where $U_{\mathrm{tdn}}$ and $U_{\mathrm{tqn}}$ are respectively instruction values of the positive-sequence d axis and q axis modulating voltages; $I_{\mathrm{fdn}}$ and $I_{\mathrm{fqn}}$ are respectively the positive-sequence d axis and q axis currents outputted by the grid side converter; $L_{\mathrm{f}}$ is the converter side filter inductance; $\omega_{\mathrm{g}}$ is an angle frequency of the power grid; $k_{\mathrm{pi\_n}}$ and $k_{\mathrm{ii\_n}}$ are respectively the proportionality coefficient and the integration coefficient of a negative-sequence current loop;

step 9.6: inputting the positive-sequence d and q axis voltage and a phase angle $\theta_{\mathrm{vsg}}$ of the grid side converter into a positive-sequence rotational coordinate system and the static coordinate system conversion formula, to obtain a positive-sequence three phase modulating voltage $U_{tp}$ of the grid side converter, and inputting the negative-sequence d and q axis voltage and the phase angle $\theta_{vsg}$ of the grid side converter into a negative-sequence rotational coordinate system and the static coordinate system conversion formula, to obtain a negative-sequence three phase modulating voltage $U_{tn}$ of the grid side converter; and

step 9.7: adding the positive-order three phase modulating voltage $U_{tp}$ with the negative-order three phase modulating voltage $U_{tn}$ as a modulating signal $U_{tabc}$ of the grid side converter, and subjecting the modulating signal to pulse width vector modulation to obtain a trigger signal of the grid side converter.

A harmonic current control method for a self-synchronized voltage source full power conversion wind power generation unit provided according to the present invention, including the following steps:

step 10.1: subjecting the d and q axis current instruction values $I_{dref}$ and $I_{qref}$ outputted by the voltage inner loop to a coordinate conversion formula of a rotational coordinate system to a two phase static coordinate system, and filtering a harmonic component by a multi-sequence line trap to obtain current instruction values $I_{\alpha ref}$ and $I_{\beta ref}$ under the two phase static coordinate, where an implementing formula of the current instruction values is as follows:

$$\begin{cases} I_{\alpha ref} = H(s)\Big[ I_{dref} \cos\theta_{vsg} + I_{qref} \sin\theta_{vsg} \Big] \\ I_{\beta ref} = H(s)\Big[ I_{dref} \sin\theta_{vsg} + I_{qref} \cos\theta_{vsg} \Big] \end{cases}$$

where $H(s)$ is a transfer function of the multi-sequence line trap, and an expression of the transfer function is as follows:

$$H(s) = \sum_{k=6n\pm 1} \frac{s^2 + k^2\omega_o^2}{s^2 + 2\xi_f k\omega_o s + k^2\omega_o^2} \quad n = 1,2$$

where $k$ is a harmonic sequence, $k=6n\pm 1$, where n is 1 and 2; and $\xi_f$ is a damping coefficient of the line trap;

step 10.2: controlling the output current of the grid side converter by using a multi-harmonic PR regulator to eliminate the harmonic component in the current, where an implementing formula of a control policy is as follows:

$$\begin{cases} U_{t\alpha} = \sum_{k=6n\pm 1} (k_{pr} + \frac{k_{ir}s}{s^2 + \omega_{rk}^2})(I_{\alpha ref} - I_{f\alpha}) \\ U_{t\beta} = \sum_{k=6n\pm 1} (k_{pr} + \frac{k_{ir}s}{s^2 + \omega_{ro}^2})(I_{\beta ref} - I_{f\beta}) \end{cases}$$

where $U_{t\alpha}$ and $U_{t\beta}$ are respectively the instruction values of the $\alpha$ axis and $\beta$ axis modulating voltages; $I_{f\alpha}$ and $I_{f\beta}$ are respectively the $\alpha$ axis and $\beta$ axis currents outputted by the grid side converter; $\omega_{rk}$ is a harmonic angle frequency; and $k_{pr}$ and $k_{ir}$ are respectively a proportionality coefficient and an integration coefficient of a PR controller; and

step 10.3: subjecting the instruction values of the modulating voltages of the two phase static coordinate system of the grid side converter to a coordinate conversion formula of the two phase static coordinate system to a three phase static coordinate system to obtain a three phase voltage value under the static coordinate system, and subjecting the three phase voltage value to pulse width vector modulation to obtain a trigger signal of the grid side converter.

A grid impedance adaptive control method for a self-synchronized voltage source full power conversion wind power generation unit provided according to the present invention, including the following steps:

step 11.1: establishing a function relation among a system inertia response capacity, a system inertia response speed, and a system reactive control response speed performance index, and grid impedance and a system control parameter according to a control architecture of the self-synchronized voltage source full power conversion wind power generation unit, where the function relation can be represented as:

$$\begin{cases} IT_c = f_1(Z_g, P_{r1}, P_{r2}, \cdots, P_m) = a_{10}Z_g + a_{11}P_{r1} + a_{12}P_{r1} + \cdots + a_{1n}P_m \\ IT_t = f_2(Z_g, P_{r1}, P_{r2}, \cdots, P_m) = a_{20}Z_g + a_{21}P_{r1} + a_{22}P_{r1} + \cdots + a_{2n}P_m \\ Q_t = f_3(Z_g, P_{r1}, P_{r2}, \cdots, P_m) = a_{30}Z_g + a_{31}P_{r1} + a_{32}P_{r1} + \cdots + a_{3n}P_m \end{cases}$$

where $Z_g$ is the grid impedance; $P_{rn}$ is the control parameter involved in a system control policy; $n$ is the number of the control policies; $IT_c$ is the system inertia response capacity; $IT_t$ is the system inertial response capacity; Qt is the system reactive control response speed; $f_1(x)$ is a function relation formula of the system inertia response capacity about the control parameters and the grid impedance; and $f_2(x)$ is a function relation formula of the system inertia response speed about the control parameters and the grid impedance; $f_3(x)$ is a function relation formula of the system reactive control response speed about the control parameters and the grid impedance; $a_{10}$, $a_{11}$, $a_{12}$, ..., $a_{1n}$, $a_{20}$, $a_{21}$, $a_{22}$, ..., $a_{2n}$, and $a_{30}$, $a_{31}$, $a_{32}$,...., $a_{3n}$ are coefficients of the control parameters in the relation formulae;

step 11.2: establishing a function of the system control parameters about the grid impedance and the system inertia response capacity, the system inertial response speed, and the system reactive response speed performance index according to the above function relation, where an expression of the function can be written as:

$$\begin{bmatrix} a_{11} & a_{12} & \cdots & a_{1n} \\ a_{21} & a_{22} & \cdots & a_{2n} \\ a_{31} & a_{32} & \cdots & a_{3n} \end{bmatrix} \begin{bmatrix} P_{r1} \\ P_{r2} \\ \cdots \\ P_m \end{bmatrix} = \begin{bmatrix} IT_c - a_{10}Z_g \\ IT_t - a_{20}Z_g \\ Q_t - a_{30}Z_g \end{bmatrix}$$

step 11.3: acquiring an amplitude of a numerical value of the grid impedance in real time through grid impedance identification, and solving a multi-cluster numerical value solution set $\{P_{ri}(1)\},...,\{P_{ri}(m)\}$ of the system control parameters according to the system inertia response capacity, the system inertial response speed, and the system reactive speed performance index;

step 11.4: establishing a function relation among a system phase angle stability margin and the system control parameters, and the grid impedance, where an expression of the function relation is as follows:

$$PM = g(Z_g, P_{r1}, P_{r2}, \cdots, P_m) = g[Z_g, \{P_{ri}\}]$$

where $PM$ is the system phase angle stability margin;

step 11.5: sequentially substituting the multi-cluster analytical expressions $\{P_{ri}(1)\},...,\{P_{ri}(m)\}$ of the system control parameters obtained in step 10.3 into the system margin function, and defining a performance function *per* of the self-synchronized voltage source conversion wind power generation unit as:

$$per = \max(g[Z_g, \{P_{ri}(1)\}], g[Z_g, \{P_{ri}(2)\}], ..., g[Z_g, \{P_{ri}(m)\}])$$

step 11.6: in a case that the performance function *per* is the maximum value, the stability margin of the self-synchronized voltage source full power conversion wind power generation unit being optimal in the current grid working condition, and taking corresponding solutions of one group of control parameters as current system control parameters.

Compared with the prior art, the present invention has the following beneficial effects:

(1) The self-synchronized voltage source full power conversion wind power generation unit provided by the present invention in the steady state can implement the grid-connected self-synchronizing function without a phase lock loop, controls the output synchronous frequency to perceive the change of the frequency of the power grid in real time, and implements active frequency support of the power grid by the wind power generation unit by introducing the synchronous frequency into the unit side converter. The added voltage and current control structure can make the dynamic response speed of the grid side converter faster and reduce the distortion factor of the output current;

(2) In a case that the self-synchronized voltage source full power conversion wind power generation unit provided by the present invention in the transient state; the direct current bus voltage is controlled by the unloading circuit to be stable, the synchronization link of the grid side converter is switched to active power synchronous control, so that the wind power generation unit and the power grid are kept synchronized during a transient fault period and the wind power generation unit has a certain inertia and damping supporting capacity; and the adopted method for adaptively modifying the virtual impedance can effectively reduce the transient overcurrent, so that the wind power generation unit keeps a continuous operation capacity during the transient fault period of the power grid;

(3) The transient state and steady state seamless switch method for the self-synchronized voltage source full power conversion wind power generation unit provided by the present invention can implement accurate switching between two synchronization modes of the wind power generation unit when the power grid has the fault by using a compound fault determination method for the alternating current voltage and the direct current bus voltage of the power grid to ensure seamless switching between the two working modes: steady state operation and transient state operation of the unit, thereby ensuring stable operation of the unit during switch control;

(4) The control method for the self-synchronized voltage source full power conversion wind power generation unit, coping with an asymmetrical power grid, provided by the present invention can eliminate secondary fluctuations on active power, reactive power, and direct current voltage;

(5) The control method for the self-synchronized voltage source full power conversion wind power generation unit, coping with a power grid containing background harmonic waves, provided by the present invention can reduce the content of harmonic waves in the output current of the wind power generation unit and improve the quality of the grid-connected power grid.

(6) The control method for the self-synchronized voltage source full power conversion wind power generation unit, coping with adaptive grid impedance, provided by the present invention can adaptively adjust the system control parameters when the grid impedance range changes, thereby improving the grid-connected stability of the system.

## BRIEF DESCRIPTION OF DRAWINGS

By reading and referring to detailed description made by the following drawings to non-restrictive embodiments, other features, purposes and advantages of the present invention will become more apparent:

FIG. 1 is a self-synchronized voltage source full power conversion wind power generation unit and a control method;
FIG. 2 is a start control block diagram for the self-synchronized voltage source full power conversion wind power generation unit;
FIG. 3 is a steady state control block diagram for the self-synchronized voltage source full power conversion wind power generation unit, including 3a: a control block diagram of a grid side converter, 3b: a control block diagram of a unit side converter, and 3c: a control block diagram of primary frequency modulation;
FIG. 4 is a transient state control block diagram for the self-synchronized voltage source full power conversion wind power generation unit;
FIG. 5 is a transient state and steady state switch control block diagram for the self-synchronized voltage source full power conversion wind power generation unit;
FIG. 6 is a control block diagram for an asymmetrical current of the self-synchronized voltage source full power conversion wind power generation unit;
FIG. 7 is a control block diagram for a harmonic current of the self-synchronized voltage source full power conversion wind power generation unit; and
FIG. 8 is an adaptive control block diagram for grid impedance of the self-synchronized voltage source full power conversion wind power generation unit.

## DETAILED DESCRIPTION OF EMBODIMENTS

The present invention will be described in detail below in combination with specific embodiments. The embodiments below contribute to further understanding the present invention by those skilled in the art but do not limit the present invention in any form. It should be noted that variations and improvements still can be made by those skilled in the technical field without departing the concept of the present invention. The variations and improvements all fall within the scope of the protection of the present invention.

Embodiment:

The present invention provides a control system for a self-synchronized voltage source full power conversion wind power generation unit to solve the following technical problems:

1) The distortion factor of the grid-connected current of the inertia synchronous control without the current inner loop is high. The inertia synchronous control added with the current inner loop provided by the present invention retains the function of autonomously perceiving the frequency change and the frequency response of the power grid by the self-synchronized voltage source wind power generation unit, and the current inner loop can improve the wave quality of the grid-connected current, thereby reducing the distortion factor of the grid-connected current.

2) Existing inertia synchronous control method is locked as a result of overcurrent when the power grid has a fault, which cannot support active support of the power grid. The fault ride-through control method for the inertia synchronous control full power wind power generation unit can implement synchronization of the power grid by the wind power generation unit with symmetrical fall faults, and can effectively inhibit the transient state overcurrent, so that the unit keeps the continuous operation capacity in the transient state fault period of the power grid, thereby implementing fault ride-through of the unit and active support of the power grid.

3) The inertia synchronous control full power wind power generation unit has two working modes in steady state operation and transient state operation. In a case that they are subjected to seamless switch control, the unit entering from the steady operation mode to the transient state operation mode is easily subjected to instability. The prevent invention provides a steady state and a transient state seamless switch control unit for the voltage source wind power generation unit, which can guarantee seamless switch of the unit in the two operation models, thereby ensuring that the unit is free of unstable problem in the switching process.

4) The existing inertial synchronous control method with the asymmetrical power grid has secondary fluctuation problem in action power, reactive power and current direct voltage. The present invention provides an inertial synchronous control method applicable to the asymmetric power grid, which can eliminate the secondary fluctuations on action power, reactive power and current direct voltage.

5) The grid-connected current in the existing inertial synchronous control method contains a large number of harmonic waves when the power grid contains background harmonic waves. The present invention provides an inertial synchronous control method applicable to the power grid containing background harmonic waves, which can effectively reduce the content of harmonic waves in the output current of the wind power generation unit and improve the quality of the grid-connected power grid.

6) The wind power generation unit is easily subjected to unstable problem when the grid impedance range changes. The control method for the self-synchronized voltage source full power conversion wind power generation unit, coping with adaptive grid impedance, provided by the present invention can adaptively adjust the system control parameters when the grid impedance range changes, thereby improving the grid-connected stability of the system.

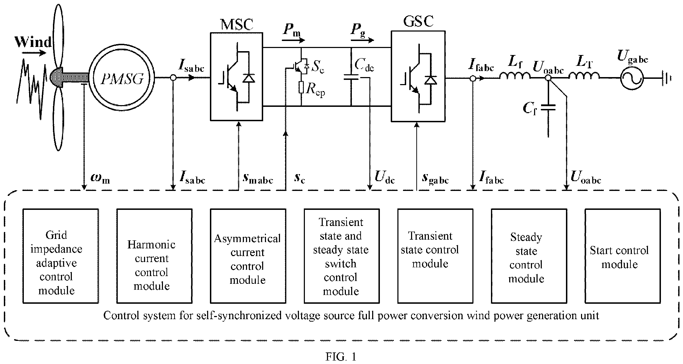

As shown in FIG. 1, the present invention includes the following modules:
a start control module, configured to implement non-impact current flexible grid-connected start control of the self-synchronized voltage source full power conversion wind power generation unit; a steady state control module, configured to implement voltage source control of the full power conversion wind power generation unit in a non-fault state of a power grid; a transient state control module, configured to implement voltage source control of the full power conversion wind power generation unit in a fault state of the power grid; a steady state and transient state switching module, configured to seamlessly switch between a steady state operation mode and a transient state operation mode of the self-synchronized voltage source full power conversion wind power generation unit; an asymmetrical current control module, configured to implement negative-sequence current control of the full power conversion wind power generation unit under an asymmetrical power grid; a harmonic current control module, configured to implement harmonic current control of the full power conversion wind power generation unit under a background harmonic power grid; and a grid impedance adaptive control module, configured to implement grid impedance adaptive control of the full power conversion wind power generation unit in power grid access scenarios at different short-circuit ratios.

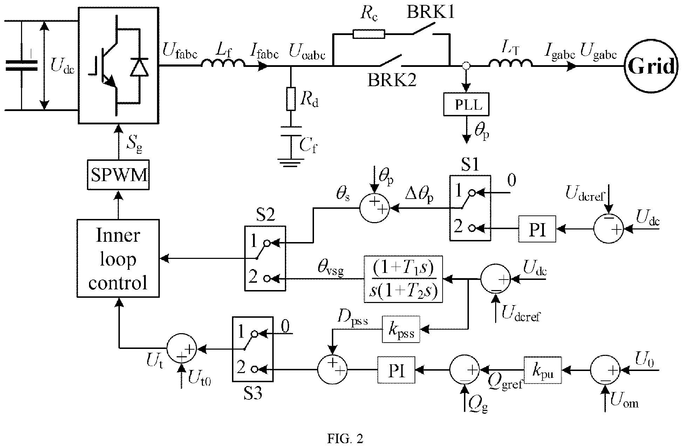

As shown in FIG. 2, a start control method for the self-synchronized voltage source full power conversion wind power generation unit includes the following steps:

step 2.1: a breaker $BRK_1$ is connected, a direct current side capacitor is charged through a pre-charging resistor $R_c$ and a diode rectifier of a grid side converter, the $BRK_1$ is disconnected after a direct current side voltage reaches a preset value, a pre-charging circuit is disconnected, and a breaker $BRK_2$ is connected;
step 2.2: switches S1, S2, and S3 are placed at a preset position 1, a drive pulse $S_g$ of the grid side converter is enabled, and in this case, a modulating voltage and a phase angle of the grid side converter are respectively set as:

$$\begin{cases} U_t = U_{t0} \\ \theta_{vsc} = \theta_p \end{cases}$$

where $U_t$ is an amplitude of the modulating voltage of the grid side converter, $\theta_{vsg}$ is a phase angle of the modulating voltage of the grid side converter of the wind power generation unit; $U_{t0}$ is an amplitude of an outlet voltage of the grid side converter of the wind power generation unit; and $\theta_p$ is a phase angle of the outlet voltage of the grid side converter of the wind power generation unit;
step 2.3: the switch S1 is placed at a position 2, and the switches S2 and S3 are placed at the position 1, a difference between an actual value and a reference value of the direct current voltage is inputted into a direct current voltage controller 1, a sum of an output of the direct current voltage controller 1 and an output phase of a phase-locked loop is taken as a phase of the modulating voltage 1 of the grid side converter, and in this case, the modulating voltage and the phase angle of the grid side converter are respectively set as:

$$\begin{cases} U_t = U_{t0} \\ \theta_{vsg} = \theta_p + \left( k_{pdc1} + \dfrac{k_{idc1}}{s} \right)\left( U_{dc} - U_{dcref} \right) \end{cases}$$

where $k_{pdc1}$ and $k_{idc1}$ are respectively a proportionality coefficient and an integration coefficient of the direct current voltage controller 1;

step 2.4: in a case that the direct current voltage reaches the set value, the switches S2 and S3 are placed at the preset position 2, and a deviation between an actual value and a given value of a direct current bus voltage is inputted into a voltage regulator 2 of the direct current bus to obtain a synchronous phase angle 2 of the grid side converter, where an implementing formula of a control policy is as follows:

$$\theta_{vsg} = \frac{1 + T_1 s}{s(1 + T_2 s)}(U_{dc} - U_{dcref})$$

where $\theta_{vsg}$ is the synchronous phase angle 2 of the grid side converter; and $T_1$ and $T_2$ are time constants of the direct current voltage regulator;

step 2.5: the deviation between the actual value and the given value of the direct current bus voltage is subjected to a stabilizing controller to obtain a stabilizing control compensation quantity of the output voltage of the converter, a difference between a given value of reactive power and an actual value of the reactive power is inputted into a reactive power regulator, and an output of the reactive power regulator is added with a voltage reference value and the stabilizing control compensation quantity to obtain an amplitude of the output voltage 2 of the converter, where an implementing formula of the control policy is as follows:

$$\begin{cases} U_t = U_{t0} + \left( k_{pq} + \dfrac{k_{iq}}{s} \right)(Q_{gref} - Q_g) + D_{pss} \\ D_{pss} = k_{pss}(U_{dc} - U_{dcref}) \end{cases}$$

where $Q_{gref}$ and $Q_g$ are respectively an instruction value and an actual value of the reactive power; $D_{pss}$ is the stabilizing control compensation quantity of the output voltage of the grid side converter; $k_{pss}$ is a stabilizing control coefficient; and $k_{pq}$ and $k_{iq}$ are respectively a proportionality coefficient and an integration coefficient of the reactive power regulator;

where the instruction value of the reactive power is obtained by the difference between the given value and the actual value of the amplitude of an output alternating current voltage of the power grid converter through an alternating current voltage regulator, and an expression thereof is as follows:

$$Q_{gref} = k_{pu}\left( U_0 - U_{om} \right)$$

where $U_o$ is the given value of the amplitude of the output alternating current voltage of the grid side converter; $U_{om}$ is the actual value of the amplitude of the output alternating current voltage of the grid side converter; and $k_{pu}$ is a proportionality coefficient of the alternating current voltage regulator; and

step 2.6: a three-phase voltage value under a static coordinate system is obtained from the instruction value $U_t$ and the synchronous phase angle $\theta_{vsg}$ of the modulating voltage of the grid side converter, and the three-phase voltage value is subjected to pulse width vector modulation to obtain a trigger signal $S_g$ of the grid side converter.

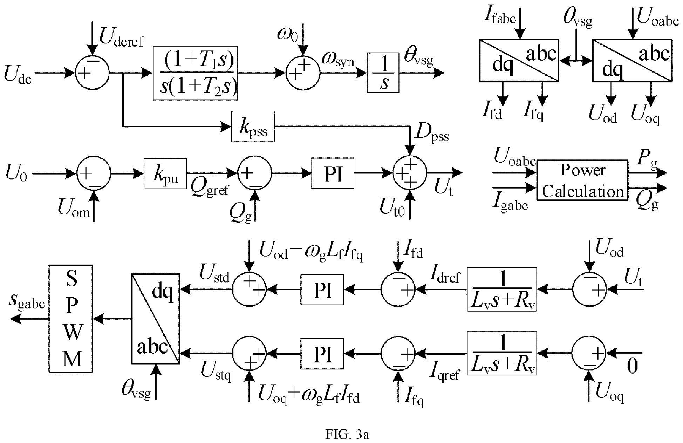

As shown in FIG. 3a, a steady state control method for a grid side converter of a self-synchronized voltage source full power conversion wind power generation unit includes the following steps:

step 4.1: a three-phase alternating current voltage $U_{oabc}$ and a three-phase alternating current $I_{fabc}$ of an output port of the grid side converter, and the synchronous angle $\theta_{vsg}$ of the grid side converter are inputted into a rotational coordinate transformation formula to obtain a *d* axis component and a *q* axis component of inputs of the three-phase alternating current voltage $U_{oabc}$ and the three-phase alternating current $I_{fabc}$, and real-time values of instantaneous active power $P_g$ and reactive power $Q_g$ of the grid side converter are calculated according to the three-phase alternating current voltage $U_{oabc}$ and a three-phase alternating current $I_{fabc}$;

step 4.2: a deviation between an actual value and a given value of a direct current bus voltage is inputted into a direct current bus voltage regulator, and the output of the direct current voltage regulator and an angle frequency reference value of the power grid are added to obtain a synchronous angle frequency of the grid side converter, where an implementing formula of a control policy is as follows:

$$\omega_{syn} = \omega_0 + G(s)(U_{dc} - U_{dcref})$$

where $\omega_{syn}$ is the synchronous angle frequency of the grid side converter; $\omega_0$ is a rated value of the angle frequency of the power grid; $T_1$ and $T_2$ are time constants of the direct current voltage regulator; $U_{dc}$ and $U_{dcref}$ are the actual value and the given value of the direct current bus voltage; and $G(s)$ is a transfer function of the direct current bus voltage regulator, and an expression thereof is as follows:

$$G(s) = \frac{1 + T_1 s}{s(1 + T_2 s)}$$

step 4.3: the synchronous angle frequency of the grid side converter is integrated to obtain a synchronous phase angle $\theta_{vsg}$ of the grid side converter, where an expression thereof is as follows:

$$\theta_{vsg} = \frac{1}{s} \omega_{syn}$$

step 4.4: the deviation $\Delta U_{dc}$ between the actual value and the given value of the direct current bus voltage is subjected to a stabilizing controller to obtain a stabilizing control compensation quantity of the output voltage of the converter, where an implementing formula thereof is as follows:

$$D_{pss} = k_{pss}(U_{dc} - U_{dcref})$$

where $k_{pss}$ is a stabilizing control coefficient;

step 4.5: the difference between the given value and the actual value of an amplitude of an output alternating current voltage of the power grid converter is subjected to an alternating current voltage regulator to obtain an instruction value of a reactive power, where an expression of a control policy is as follows:

$$Q_{gref} = k_{pu}\left(U_0 - U_{om}\right)$$

where $U_o$ is the given value of the amplitude of the output alternating current voltage of the grid side converter; $U_{om}$ is the actual value of the amplitude of the output alternating current voltage of the grid side converter; and $k_{pu}$ is a proportionality coefficient of the alternating current voltage regulator; and

step 4.6: a difference between a given value of the reactive power and an actual value of the reactive power is inputted into a reactive power regulator, and the output of the reactive power regulator is added with a voltage reference value and the stabilizing control compensation quantity to obtain an amplitude of an output voltage reference value of the converter, where an implementing formula of the control policy is as follows:

$$U_t = U_{t0} + \left(k_{pq} + \frac{k_{iq}}{s}\right)(Q_{gref} - Q_g) + D_{pss}$$

where $U_t$ is the amplitude of the output voltage reference value of the grid side converter; $U_{t0}$ is an amplitude of a rated voltage of the power grid; $k_{pq}$ and $k_{iq}$ are respectively a proportionality coefficient and an integration coefficient of the reactive power regulator; $Q_{gref}$ and $Q_g$ are respectively an instruction value and an actual value of the reactive power; and $D_{pss}$ is the stabilizing control compensation quantity of the output voltage of the grid side converter;

step 4.7: the amplitude of the output voltage reference value of the grid side converter is used as a d axis instruction value of an output voltage inner loop, a q axis instruction value of the output voltage inner loop of the grid side converter is set as 0, a difference between the d axis instruction value and an actual value of the d axis voltage of the voltage inner loop of the grid side converter is subjected to a virtual impedance link to obtain a d axis current instruction, and a difference between the q axis instruction value and the q axis voltage of the voltage inner loop of the grid side converter is subjected to the virtual impedance link to obtain a q axis current instruction, where an implementing formula of the control policy is as follows:

$$
\begin{cases}
I_{\text{dref}} = \dfrac{U_{\text{td}} - U_{\text{od}}}{L_{\text{v}} s + R_{\text{v}}} \\[3mm]
I_{\text{qref}} = \dfrac{U_{\text{tq}} - U_{\text{oq}}}{L_{\text{v}} s + R_{\text{v}}}
\end{cases}
$$

where $U_{\text{td}}$ and $U_{\text{tq}}$ are respectively the d axis and q axis instruction values of the voltage inner loop of the grid side converter, and there are $U_{\text{td}} = U_{\text{t}}$ and $U_{\text{tq}} = 0$; $U_{\text{od}}$ and $U_{\text{oq}}$ are respectively d axis and q axis voltages of a port of the grid side converter; $I_{\text{dref}}$ and $I_{\text{qref}}$ are respectively d axis and q axis current instruction values; and $L_{\text{v}}$ and $R_{\text{v}}$ are respectively a virtual inductance and a virtual resistance value of the virtual impedance link;

step 4.8: a difference between the d axis instruction value and the d axis current of a current inner loop of the grid side converter is subjected to a PI regulator to obtain a d axis modulating voltage instruction value, a difference between the q axis instruction value and the q axis current of the current inner loop of the grid side converter is subjected to the PI regulator to obtain a q axis modulating voltage instruction value, where an implementing formula of a control policy is as follows:

$$
\begin{cases}
U_{\text{std}} = (k_{\text{pi}} + \dfrac{k_{\text{ii}}}{s})(I_{\text{d1ref}} - I_{\text{fd}}) - \omega_{\text{g}} L_{\text{f}} I_{\text{fq}} + U_{\text{od}} \\[3mm]
U_{\text{stq}} = (k_{\text{pi}} + \dfrac{k_{\text{ii}}}{s})(I_{\text{q1ref}} - I_{\text{fq}}) + \omega_{\text{g}} L_{\text{f}} I_{\text{fd}} + U_{\text{oq}}
\end{cases}
$$

where $U_{\text{std}}$ and $U_{\text{stq}}$ are respectively the d axis and q axis modulating voltage instruction values; $I_{\text{fd}}$ and $I_{\text{fq}}$ are respectively the d axis and q axis currents outputted by the grid side converter; $L_{\text{f}}$ is converter side filter inductance; $\omega_{\text{g}}$ is the angle frequency of the power grid; and $k_{\text{pi}}$ and $k_{\text{ii}}$ are respectively a current loop proportion and an integration coefficient; and

step 4.9: the instruction value of the modulating voltage of the grid side converter is subjected to a synchronous phase angle $\theta_{\text{vsg}}$ to obtain a three-phase voltage value under a static coordinate system, and the three-phase voltage value is subjected to pulse width vector modulation to obtain a trigger signal of the grid side converter.

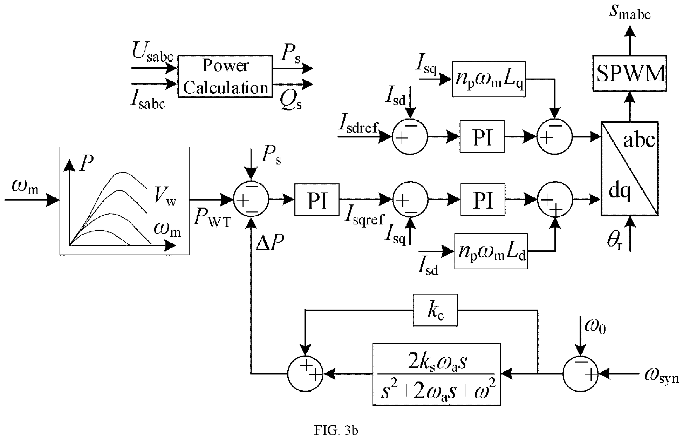

As shown in FIG. 3b, a steady state control method for a unit side converter of a self-synchronized voltage source full power conversion wind power generation unit includes the following steps:

step 5.1: a three-phase alternating current $I_{\text{sabc}}$ outputted by the unit side converter and a rotor angle $\theta_{\text{r}}$ of a generator are inputted into a rotational coordinate transformation formula to obtain a d axis component and a q axis component inputted by the three-phase alternating current $I_{\text{sabc}}$, and real-time values of instantaneous active power $P_{\text{s}}$ and reactive power $Q_{\text{s}}$ of the unit side converter are calculated according to a three-phase alternating current voltage $U_{\text{sabc}}$ and a three-phase alternating current $I_{\text{sabc}}$;

step 5.2: a rotating speed-power table is looked up according to a current rotating speed of a wind turbine to obtain a maximum output power $P_{\text{WT}}$ of the wind power generation unit, a difference between a synchronous angle frequency outputted by a grid side converter and a rated angle frequency of the power grid is subjected to a proportional-resonant controller to obtain inertia response power $\Delta P$ of the unit side converter, so as to further obtain a power instruction value of the wind power generation unit, where an implementing formula of the power instruction value is as follows:

$$
P_{\text{sref}} = P_{\text{WT}} - \Delta P = P_{\text{WT}} + \left( k_{\text{c}} + \dfrac{2 k_{\text{s}} \xi \omega_{\text{c}} s}{s^2 + 2\xi \omega_{\text{c}} s + \omega_{\text{c}}^2} \right) \left( \omega_{\text{syn}} - \omega_0 \right)
$$

where $P_{\text{sref}}$ is a reference value of a power link; $P_{\text{WT}}$ is the maximum output power of the wind power generation unit; $\Delta P$ is the inertia response power; $k_{\text{c}}$ is a proportionality coefficient of the proportional-resonant controller; $k_{\text{s}}$ is a gain of the proportional-resonant controller at a resonant frequency; $\xi$ is a damping coefficient of the proportional-resonant controller; and $\omega_c$ is a resonant angle frequency;

step 5.3: a difference between a given value of reactive power and an actual value of the reactive power of the unit side converter is inputted into a reactive power regulator, and using an output value of the active power regulator as a q axis current instruction value of the unit side converter, where an implementing formula of a control policy is as follows:

$$I_{\text{sqref}} = \left( k_{\text{pp}} + \frac{k_{\text{ip}}}{s} \right)(P_{\text{sref}} - P_{\text{s}})$$

where $P_{\text{sref}}$ and $P_{\text{s}}$ are respectively the instruction value and the actual value of the output power of the wind power generation unit; and $k_{\text{pp}}$ and $k_{\text{ip}}$ are the proportionality coefficient and an integration coefficient of the reactive power regulator;

step 5.4: a difference between the d axis instruction value and the d axis actual value of a current inner loop of the unit side converter is subjected to a PI regulator to obtain a d axis modulating voltage instruction value, a difference between the q axis instruction value and the q axis actual value of the current inner loop of the unit side converter is subjected to the PI regulator to obtain a q axis modulating voltage instruction value, where an implementing formula of a control policy is as follows:

$$\begin{cases} U_{\text{sd}} = (k_{\text{pi\_m}} + \dfrac{k_{\text{ii\_m}}}{s})(I_{\text{sdref}} - I_{\text{sd}}) - n_{\text{p}}\omega_{\text{m}}L_{\text{sq}}I_{\text{sq}} \\ U_{\text{sq}} = (k_{\text{pi\_m}} + \dfrac{k_{\text{ii\_m}}}{s})(I_{\text{sqref}} - I_{\text{sq}}) + n_{\text{p}}\omega_{\text{m}}L_{\text{sd}}I_{\text{sd}} + n_{\text{p}}\omega_{\text{m}}\psi_{\text{r}} \end{cases}$$

where $U_{\text{sd}}$ and $U_{\text{sq}}$ are respectively d axis and q axis modulating voltage instruction values; $I_{\text{sd}}$ and $I_{\text{sq}}$ are respectively d axis and q axis currents outputted by the unit side converter; $L_{\text{sd}}$ and $L_{\text{sq}}$ are d axis and q axis inductance of the generator; $\omega_{\text{m}}$ is a mechanical angle frequency of a rotor of the generator; $n_{\text{p}}$ is a number of pole-pairs of the generator; $\psi_{\text{r}}$ is a rated flux linkage of the generator; and $k_{\text{pi\_m}}$ and $k_{\text{ii\_m}}$ are a current loop proportion and an integration coefficient of the unit side converter; and

step 5.5: the modulating voltage instruction value of the unit side converter and the rotor angle $\theta_{\text{r}}$ is subjected to rotational coordinate inverse transformation to obtain a three-phase voltage value under a static coordinate system, and the three-phase voltage value is subjected to pulse width vector modulation to obtain a trigger signal of the unit side converter.

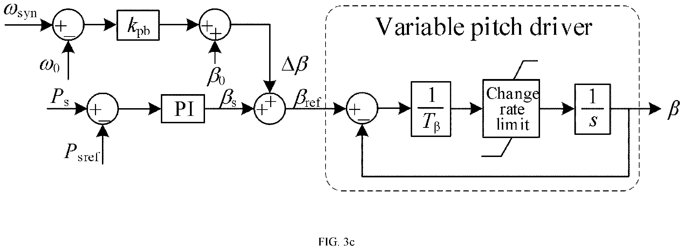

As shown in FIG. 3c, a primary frequency modulation control method for a unit side converter of a self-synchronized voltage source full power conversion wind power generation unit includes the following steps:

step 6.1: a difference between an actual value and instruction value of an active power of the wind power generation unit is inputted into a power controller to obtain a pitch angle set value, where an implementing formula of a control policy is as follows:

$$\beta_{\text{s}} = (k_{\text{ppj}} + \frac{k_{\text{ipj}}}{s})(P_{\text{s}} - P_{\text{sref}})$$

where $\beta_{\text{s}}$ is the pitch angle set value; $P_{\text{sref}}$ and $Ps$ are respectively the instruction value and the actual value of the active power of the wind power generation unit; a compensation value; and $k_{\text{ppj}}$ and $k_{\text{ipj}}$ are a proportionality coefficient and an integration coefficient of the power controller;

step 6.2: a difference between a synchronous angle frequency outputted by the grid side converter and the rated angle frequency of the power grid are inputted into a primary frequency modulation regulator, and an output of the primary frequency modulation regulator and the pitch angle preset set are added to obtain a pitch angle compensation value, where an implementing formula of a control policy is as follows:

$$\Delta\beta = \beta_0 + k_{\text{pb}}\left(\omega_{\text{syn}} - \omega_0\right)$$

where $\beta_0$ is the pitch angle set value; $\Delta\beta$ is the pitch angle compensation value; and $k_{\text{pb}}$ is a proportionality coefficient of the primary frequency modulation controller; and

step 6.3: a sum of the pitch angle set value and the pitch angle compensation value as a pitch angle instruction value is sent to a variable pitch controller to control the pitch angle of the wind power generation unit to realize a primary frequency modulation function of the unit.

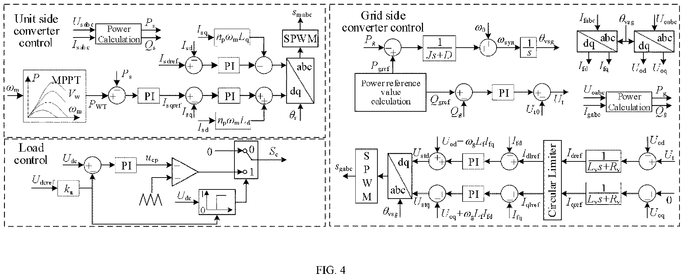

As shown in FIG. 4, a transient state control method for the self-synchronized voltage source full power conversion wind power generation unit includes the following steps:

step 7.1: in a case that a direct current voltage is greater than $k_{\mathrm{a}} * U_{\mathrm{dcref}}$, an unloading circuit acts to control a direct current bus voltage by using a PI regulator, and compares an output value of the regulator with a PWM generator to generate a high frequency pulse signal to control the unloading circuit to work, where an implementing formula of a control policy is as follows:

$$u_{\mathrm{cp}} = (k_{\mathrm{pc}} + \frac{k_{\mathrm{ic}}}{s})(U_{\mathrm{dc}} - k_{\mathrm{a}} U_{\mathrm{dcref}})$$

where $u_{\mathrm{cp}}$ is an output of an unloading circuit controller; $k_{\mathrm{pc}}$ and $k_{\mathrm{ic}}$ are respectively an unloading control loop proportionality coefficient and an integration coefficient; and $k_{\mathrm{a}}$ is a direct current voltage unloading action coefficient; step 7.2: a difference between an instruction value and an actual value of an active power is inputted into a virtual synchronous controller, an output of the virtual synchronous controller is added with an angle frequency reference value to obtain an output angle frequency of the grid side converter, and the output angle frequency of the grid side converter is integrated to obtain asynchronous phase angle of the grid side converter, where an implementing formula of a control policy is as follows:

$$\begin{cases} \omega_{\mathrm{syn}} = \omega_0 + \dfrac{1}{Js + D}(P_{\mathrm{ref}} - P_{\mathrm{g}}) \\ \theta_{\mathrm{syn}} = \dfrac{1}{s}\omega_{\mathrm{syn}} \end{cases}$$

where $P_{\mathrm{ref}}$ and $P_{\mathrm{g}}$ are respectively the instruction value and the actual value of the active power; and $J$ and $D$ are respectively a virtual inertia and a virtual damping; step 7.3: a difference between a given value of reactive power and an actual value of the reactive power is inputted into a reactive power regulator, and an output of a reactive power regulator is added with a voltage reference value to obtain an amplitude of an output voltage reference value of a converter, where an implementing formula of a control policy is as follows:

$$U_{\mathrm{t}} = U_0 + \left(k_{\mathrm{pq}} + \frac{k_{\mathrm{iq}}}{s}\right)(Q_{\mathrm{gref}} - Q_{\mathrm{g}})$$

step 7.4: an error between the d axis and q axis instruction values and the actual values of output voltages of the grid side converter is subjected to an adaptive virtual impedance link to obtain the d axis and q axis instruction values of output currents of the grid side converter, where an expression of the adaptive virtual impedance link is as follows:

$$\begin{cases} L_{\mathrm{v\_ft}} = \dfrac{\sqrt{I_{\mathrm{dref}}^2 + I_{\mathrm{qref}}^2}}{I_{\mathrm{lim}}} L_{\mathrm{v}} \\ R_{\mathrm{v\_ft}} = \dfrac{\sqrt{I_{\mathrm{dref}}^2 + I_{\mathrm{qref}}^2}}{I_{\mathrm{lim}}} R_{\mathrm{v}} \end{cases}$$

$L_{\mathrm{v\_ft}}$ and $R_{\mathrm{v\_ft}}$ are respectively a virtual inductance value and a virtual resistance value of the adaptive virtual impedance link; step 7.5: an expression of the d axis and q axis instruction values of the output currents of the grid side converter in the adaptive virtual impedance link are obtained as follows:

$$I_{\text{dlref}} = \begin{cases} I_{\text{dref}} \dfrac{I_{\text{lim}}}{\sqrt{I_{\text{dref}}^2 + I_{\text{qref}}^2}}, & \sqrt{I_{\text{dref}}^2 + I_{\text{qref}}^2} > I_{\text{lim}} \\[4mm] I_{\text{dref}} \quad , & \sqrt{I_{\text{dref}}^2 + I_{\text{qref}}^2} \leq I_{\text{lim}} \end{cases}$$

$$I_{\text{qlref}} = \begin{cases} I_{\text{qref}} \dfrac{I_{\text{lim}}}{\sqrt{I_{\text{dref}}^2 + I_{\text{qref}}^2}}, & \sqrt{I_{\text{dref}}^2 + I_{\text{qref}}^2} > I_{\text{lim}} \\[4mm] I_{\text{qref}} \quad , & \sqrt{I_{\text{dref}}^2 + I_{\text{qref}}^2} \leq I_{\text{lim}} \end{cases}$$

where $I_{\text{dlref}}$ and $I_{\text{qlref}}$ are respectively d axis and q axis current instruction values after amplitude limitation; and $I_{\text{lim}}$ is a maximum allowed output current amplitude;

step 7.6: an instruction value of an apparent power and the instruction value of the active power are set according to a drop depth of a voltage of the power grid, where an expression of the apparent power instruction value is as follows:

$$S_{\text{new}} = \frac{3\sqrt{2}}{2} U_{\text{orms}} \sqrt{I_{\text{dlref}}^2 + I_{\text{qlref}}^2}$$

where $S_{\text{new}}$ is the maximum apparent power that can be sent in a fault period; and $U_{\text{orms}}$ is an effective value of a voltage of a port of the wind power generation unit; and

an expression of the instruction value of the active power is as follows:

$$P_{\text{gref}} = \sqrt{S_{\text{new}}^2 - Q_{\text{gref}}^2}$$

step 7.7: the unit side converter shields an inertia response function during a transient fault of the power grid, where the power of the wind power generation unit is obtained by looking up a rotating speed-power table according to a current rotating speed of the wind turbine.

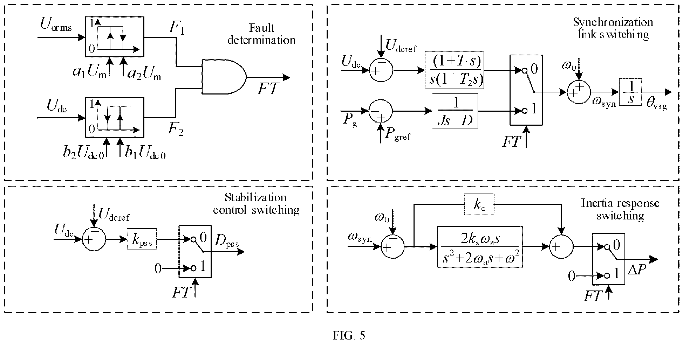

As shown in FIG. 5, a transient state and steady state switch control method for the self-synchronized voltage source full power conversion wind power generation unit includes the following steps:

step 8.1: in a case that an alternating current voltage fault incident $F_1$ and a direct current voltage abnormal incident $F_2$ are detected at the same time and a transient state and steady state switch control signal FT of the self-synchronized voltage source full power conversion wind power generation unit, a fault ride-through control policy is executed, where a fault signal $F_1$ is used to judge an alternating current voltage fault, and an expression is as follows:

$$F_1 = \begin{cases} 1, U_{\text{orms}} < a_1 U_m \\ 0, U_{\text{orms}} > a_2 U_m \end{cases}$$

where $a_1$ and $a_2$ are respectively logical determining proportionality factors of the alternating current voltage;

the fault signal $F_2$ is used to determine a direct current voltage abnormality, where an expression is as follows:

$$F_2 = \begin{cases} 1, U_{\text{dc}} > b_1 U_{\text{dc0}} \\ 0, U_{\text{dc}} < b_2 U_{\text{dc0}} \end{cases}$$

where $b_1$ and $b_2$ are respectively logical determining proportionality factors of the alternating current voltage;

the transient state and steady state switch control signal FT is integrally generated by the fault signals $F_1$ and $F_2$:

$$FT = F_1 \,\&\, F_2$$

step 8.2: in a case that the transient state and steady state control signal FT is invalid, a direct current voltage is used in a synchronization link for synchronization; in a case that the transient state and steady state switch control signal FT is valid, a power synchronous control mode is used in the synchronization link; switching is performed in the synchronization link of the grid side converter at a synchronous frequency position to guarantee that an output phase angle of the grid side converter does not mutate, to effectively avoid an impact in the switch process, where an implementing formula of a control policy is as follows:

$$\omega_{\text{syn}} = \begin{cases} \dfrac{1+T_1 s}{s(1+T_2 s)}(U_{\text{dc}} - U_{\text{dcref}}) + \omega_0, FT = 0 \\ \dfrac{1}{Js+D}(P_{\text{gref}} - P_{\text{g}}) + \omega_0, FT = 1 \end{cases}$$

step 8.3: in a case that the transient state and steady state switch control signal $FT$ is invalid, determining that the stabilizing control compensation amount added to the modulating voltage of the grid side converter is valid; in a case that the transient state and steady state switch control signal $FT$ is valid, determining that the stabilizing control compensation amount added to the modulating voltage of the grid side converter is 0, that is, the stabilizing control compensation amount is only used to improve the stability of a control system of the grid side converter in the steady state, which is 0 in the transient state, and an implementing formula of a control policy is as follows:

$$D_{\text{pss}} = \begin{cases} k_{\text{pss}}(U_{\text{dc}} - U_{\text{dcref}}), FT = 0 \\ 0, \qquad FT = 1 \end{cases}$$

step 8.4: in a case that the transient state and steady state switch control signal $FT$ is invalid, the wind power generation responds to a power grid frequency incident, where the inertia response function is valid; in a case that the transient state and steady state switch control signal $FT$ is valid, responding, by the wind power generation unit, to a power grid frequency incident is skipped, where an additional inertia response power is 0, that is, the frequency response control link of the unit side converter is locked in a transient operation mode, and an implementing formula of inertia response control is as follows:

$$\Delta P = \begin{cases} \left(k_{\text{c}} + \dfrac{2k_{\text{s}}\omega_{\text{a}} s}{s^2 + 2\omega_{\text{a}} s + \omega^2}\right)(\omega_{\text{syn}} - \omega_0), FT = 0 \\ 0, \qquad FT = 1 \end{cases}$$

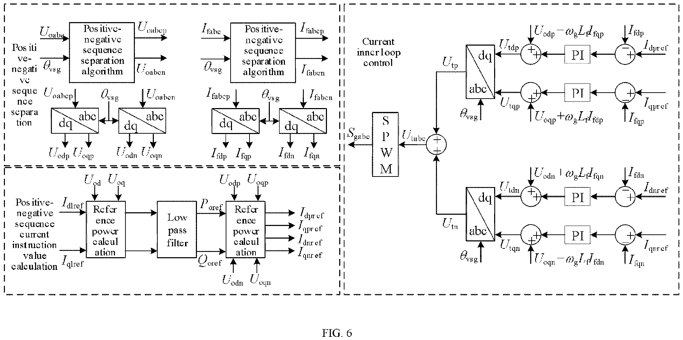

As shown in FIG. 6, an asymmetrical output current control method for the self-synchronized voltage source full power conversion wind power generation unit includes the following steps:

step 9.1: a synchronous phase angle of a grid side converter is used as a conversion angle, one-quarter delay method is used to obtain a positive-sequence component and a negative-sequence component of a three phase alternating voltage and a three phase alternating current of the wind power generation unit;

step 9.2: a virtual active power and reactive power of the grid side converter are obtained through the d and q axis current instruction values $I_{\text{dlref}}$ and $I_{\text{qlref}}$ of the grid side converter after amplitude limitation and the d axis component and q axis component $U_{\text{od}}$ and $U_{\text{oq}}$ of the alternating current voltage of the wind power generation unit, and a double frequency component is filtered out through a low-pass filter to obtain an instruction value $P_{\text{oref}}$ of an active power and an instruction value $Q_{\text{oref}}$ of a reactive power, where a calculating formula is as follows:

$$\begin{cases} P_{\text{oref}} = \dfrac{1}{1+T_3 s}(U_{\text{od}} I_{\text{dlref}} + U_{\text{oq}} I_{\text{qlref}}) \\ Q_{\text{oref}} = \dfrac{1}{1+T_3 s}(U_{\text{oq}} I_{\text{dlref}} - U_{\text{od}} I_{\text{qlref}}) \end{cases}$$

where $T_3$ is a time constant of the low-pass filter;

step 9.3: according to the active power instruction value and the reactive power instruction value, a positive-sequence d axis component and a positive-sequence q axis component $U_{\text{odp}}$ and $U_{\text{oqp}}$ and a negative-sequence d axis component and a negative-sequence q axis component $U_{\text{odn}}$ and $U_{\text{oqn}}$ of the alternating current voltage of the wind power generation unit, instruction values $I_{\text{dpref}}$, $I_{\text{qpref}}$, $I_{\text{dnref}}$, and $I_{\text{qnref}}$ of the positive-sequence and negative-sequence currents are respectively obtained according to control targets of inhibiting the negative-sequence current, fluctuation at a double frequency of the active power, and fluctuation at a double frequency of the reactive power; under the control target of inhibiting the negative-sequence current, a calculating formula for the instruction value of the positive-sequence and negative-sequence currents is as follows:

$$
\begin{bmatrix} I_{\mathrm{dpref}} \\ I_{\mathrm{qpref}} \\ I_{\mathrm{dnref}} \\ I_{\mathrm{qnref}} \end{bmatrix} = \frac{2}{3\left(U_{\mathrm{odp}}^2 + U_{\mathrm{oqp}}^2\right)} \begin{bmatrix} U_{\mathrm{oqp}} & -U_{\mathrm{odp}} & 0 & 0 \\ U_{\mathrm{odp}} & U_{\mathrm{oqp}} & 0 & 0 \\ 0 & 0 & 0 & 0 \\ 0 & 0 & 0 & 0 \end{bmatrix} \begin{bmatrix} P_{\mathrm{oref}} \\ Q_{\mathrm{oref}} \\ 0 \\ 0 \end{bmatrix}
$$

under the control target of inhibiting the fluctuation at the double frequency of the active power, a calculating formula of the instruction value of the positive and negative-sequence current is as follows:

$$
\begin{bmatrix} I_{\mathrm{dpref}} \\ I_{\mathrm{qpref}} \\ I_{\mathrm{dnref}} \\ I_{\mathrm{qnref}} \end{bmatrix} = \frac{2P_{\mathrm{oref}}}{3D_1} \begin{bmatrix} U_{\mathrm{odp}} \\ U_{\mathrm{oqp}} \\ -U_{\mathrm{odn}} \\ -U_{\mathrm{oqn}} \end{bmatrix} + \frac{2Q_{\mathrm{oref}}}{3D_2} \begin{bmatrix} U_{\mathrm{oqp}} \\ -U_{\mathrm{odp}} \\ U_{\mathrm{oqn}} \\ -U_{\mathrm{odn}} \end{bmatrix}
$$

under the control target of inhibiting the fluctuation at the double frequency of reactive power, a calculating formula of the instruction value of the positive-sequence and negative-sequence currents is as follows:

$$
\begin{bmatrix} I_{\mathrm{dpref}} \\ I_{\mathrm{qpref}} \\ I_{\mathrm{dnref}} \\ I_{\mathrm{qnref}} \end{bmatrix} = \frac{2P_{\mathrm{oref}}}{3D_2} \begin{bmatrix} U_{\mathrm{odp}} \\ U_{\mathrm{oqp}} \\ U_{\mathrm{odn}} \\ U_{\mathrm{oqn}} \end{bmatrix} + \frac{2Q_{\mathrm{oref}}}{3D_1} \begin{bmatrix} U_{\mathrm{oqp}} \\ -U_{\mathrm{odp}} \\ -U_{\mathrm{oqn}} \\ U_{\mathrm{odn}} \end{bmatrix}
$$

where

$$
\begin{cases} D_1 = U_{\mathrm{odp}}^2 + U_{\mathrm{oqp}}^2 - U_{\mathrm{odn}}^2 - U_{\mathrm{oqn}}^2 \\ D_2 = U_{\mathrm{odp}}^2 + U_{\mathrm{oqp}}^2 + U_{\mathrm{odn}}^2 + U_{\mathrm{oqn}}^2 \end{cases}
$$

step 9.4: a difference between the positive-sequence d axis instruction value and the d axis current of a current inner loop of the grid side converter is subjected to a PI regulator to obtain an instruction value of a positive-sequence d axis modulating voltage, and a difference between the positive-sequence q axis instruction value and the q axis current of the current inner loop of the grid side converter is subjected to the PI regulator to obtain an instruction value of the positive-sequence d axis modulating voltage, where an implementing formula of a control policy is as follows:

$$
\begin{cases} U_{\mathrm{tdp}} = (k_{\mathrm{pi\_p}} + \dfrac{k_{\mathrm{ii\_p}}}{s})(I_{\mathrm{dpref}} - I_{\mathrm{fdp}}) - \omega_{\mathrm{g}} L_{\mathrm{f}} I_{\mathrm{fqp}} + U_{\mathrm{odp}} \\ U_{\mathrm{tqp}} = (k_{\mathrm{pi\_p}} + \dfrac{k_{\mathrm{ii\_p}}}{s})(I_{\mathrm{qpref}} - I_{\mathrm{fqp}}) + \omega_{\mathrm{g}} L_{\mathrm{f}} I_{\mathrm{fdp}} + U_{\mathrm{oqp}} \end{cases}
$$

where $U_{\mathrm{tdp}}$ and $U_{\mathrm{tqp}}$ are respectively instruction values of the positive-sequence d axis and q axis modulating voltage; $I_{\mathrm{fdp}}$ and $I_{\mathrm{fqp}}$ are respectively the positive-sequence d axis and q axis currents outputted by the grid side converter; $L_{\mathrm{f}}$ is the converter side filter inductance; $\omega_{\mathrm{g}}$ is the angle frequency of the power grid; $k_{\mathrm{pi\_p}}$ and $k_{\mathrm{ii\_p}}$ are respectively the proportionality coefficient and the integration coefficient of the positive-sequence current loop;

step 9.5: the difference between the negative-sequence d axis instruction value and the d axis current of the current inner loop of the grid side converter is subjected to the PI regulator to obtain the instruction value of the negative-sequence d axis modulating voltage, and the difference between the negative-sequence q axis instruction and the q axis current of the current inner loop of the grid side converter is subjected to the PI regulator to obtain the instruction value of the negative-sequence q axis modulating voltage, where an implementing formula of a control policy is as follows:

$$
\begin{cases}
U_{\text{tdn}} = (k_{\text{pi\_n}} + \dfrac{k_{\text{ii\_n}}}{s})(I_{\text{dnref}} - I_{\text{fdn}}) - \omega_{\text{g}} L_{\text{f}} I_{\text{fqn}} + U_{\text{odn}} \\[2mm]
U_{\text{tqn}} = (k_{\text{pi\_n}} + \dfrac{k_{\text{ii\_n}}}{s})(I_{\text{qnref}} - I_{\text{fqn}}) + \omega_{\text{g}} L_{\text{f}} I_{\text{fdn}} + U_{\text{oqn}}
\end{cases}
$$

where $U_{\text{tdn}}$ and $U_{\text{tqn}}$ are respectively instruction values of the positive-sequence d axis and q axis modulating voltages; $I_{\text{fdn}}$ and $I_{\text{fqn}}$ are respectively the positive-sequence d axis and q axis currents outputted by the grid side converter; $L_{\text{f}}$ is the converter side filter inductance; $\omega_{\text{g}}$ is an angle frequency of the power grid; $k_{\text{pi\_n}}$ and $k_{\text{ii\_n}}$ are respectively the proportionality coefficient and the integration coefficient of a negative-sequence current loop;

step 9.6: the positive-sequence d and q axis voltage and a phase angle $\theta_{\text{vsg}}$ of the grid side converter are inputted into a positive-sequence rotational coordinate system and the static coordinate system conversion formula, to obtain a positive-sequence three phase modulating voltage $U_{\text{tp}}$ of the grid side converter, and the negative-sequence d and q axis voltage and the phase angle $\theta_{\text{vsg}}$ of the grid side converter are inputted into a negative-sequence rotational coordinate system and the static coordinate system conversion formula, to obtain a negative-sequence three phase modulating voltage $U_{\text{tn}}$ of the grid side converter; and

step 9.7: the positive-order three phase modulating voltage $U_{\text{tp}}$ is added with the negative-order three phase modulating voltage $U_{\text{tn}}$ as a modulating signal $U_{\text{tabc}}$ of the grid side converter, and the modulating signal to pulse width vector modulation is subjected to obtain a trigger signal of the grid side converter.

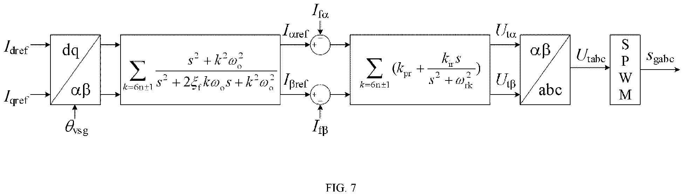

As shown in FIG. 7, a harmonic current control method for the self-synchronized voltage source full power conversion wind power generation unit includes the following steps:

step 10.1: the d and q axis current instruction values $I_{\text{dref}}$ and $I_{\text{qref}}$ outputted by the voltage inner loop are subjected to a coordinate conversion formula of a rotational coordinate system to a two phase static coordinate system, and a harmonic component is filtered by a multi-sequence line trap to obtain current instruction values $I_{\alpha\text{ref}}$ and $I_{\beta\text{ref}}$ under the two phase static coordinate, where an implementing formula of the current instruction values is as follows:

$$
\begin{cases}
I_{\alpha\text{ref}} = H(s)\left[ I_{\text{dref}} \cos\theta_{\text{vsg}} + I_{\text{qref}} \sin\theta_{\text{vsg}} \right] \\[2mm]
I_{\beta\text{ref}} = H(s)\left[ I_{\text{dref}} \sin\theta_{\text{vsg}} + I_{\text{qref}} \cos\theta_{\text{vsg}} \right]
\end{cases}
$$

where $H(s)$ is a transfer function of the multi-sequence line trap, and an expression of the transfer function is as follows:

$$
H(s) = \sum_{k=6n\pm 1} \frac{s^2 + k^2\omega_{\text{o}}^2}{s^2 + 2\xi_{\text{f}} k\omega_{\text{o}} s + k^2\omega_{\text{o}}^2} \qquad n = 1,2
$$

where $k$ is a harmonic sequence, $k=6n\pm 1$, where n is 1 and 2; and $\xi_{\text{f}}$ is a damping coefficient of the line trap;

step 10.2: controlling the output current of the grid side converter by using a multi-harmonic PR regulator to eliminate the harmonic component in the current, where an implementing formula of a control policy is as follows:

$$
\begin{cases}
U_{\text{t}\alpha} = \sum_{k=6n\pm 1} (k_{\text{pr}} + \dfrac{k_{\text{ir}}s}{s^2 + \omega_{\text{rk}}^2})(I_{\alpha\text{ref}} - I_{\text{f}\alpha}) \\[2mm]
U_{\text{t}\beta} = \sum_{k=6n\pm 1} (k_{\text{pr}} + \dfrac{k_{\text{ir}}s}{s^2 + \omega_{\text{ro}}^2})(I_{\beta\text{ref}} - I_{\text{f}\beta})
\end{cases}
$$

where $U_{\text{t}\alpha}$ and $U_{\text{t}\beta}$ are respectively the instruction values of the $\alpha$ axis and $\beta$ axis modulating voltages; $I_{\text{f}\alpha}$ and $I_{\text{f}\beta}$ are respectively the $\alpha$ axis and $\beta$ axis currents outputted by the grid side converter; $\omega_{\text{rk}}$ is a harmonic angle frequency; and $k_{\text{pr}}$ and $k_{\text{ir}}$ are respectively a proportionality coefficient and an integration coefficient of a PR controller; and

step 10.3: the instruction values of the modulating voltages of the two phase static coordinate system of the grid side converter are subjected to a coordinate conversion formula of the two phase static coordinate system to a three phase static coordinate system to obtain a three phase voltage value under the static coordinate system, and the three phase voltage value is subjected to pulse width vector modulation to obtain a trigger signal of the grid side converter.

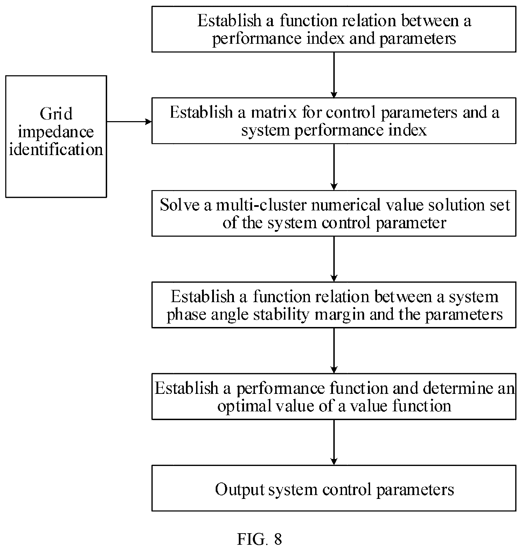

As shown in FIG. 8, a grid impedance adaptive control method for the self-synchronized voltage source full power conversion wind power generation unit includes the following steps:

step 11.1: a function relation among a system inertia response capacity, a system inertia response speed, and a system reactive control response speed performance index, and grid impedance and a system control parameter is established according to a control architecture of the self-synchronized voltage source full power conversion wind power generation unit, where the function relation can be represented as:

$$\begin{cases} IT_c = f_1(Z_g, P_{r1}, P_{r2}, \cdots, P_m) = a_{10}Z_g + a_{11}P_{r1} + a_{12}P_{r1} + \cdots + a_{1n}P_m \\ IT_t = f_2(Z_g, P_{r1}, P_{r2}, \cdots, P_m) = a_{20}Z_g + a_{21}P_{r1} + a_{22}P_{r1} + \cdots + a_{2n}P_m \\ Q_t = f_3(Z_g, P_{r1}, P_{r2}, \cdots, P_m) = a_{30}Z_g + a_{31}P_{r1} + a_{32}P_{r1} + \cdots + a_{3n}P_m \end{cases}$$

where $Z_g$ is the grid impedance; $P_{rn}$ is the control parameter involved in a system control policy; $n$ is the number of the control policies; $IT_c$ is the system inertia response capacity; $IT_t$ is the system inertial response capacity; $Q_t$ is the system reactive control response speed; $f_1(x)$ is a function relation formula of the system inertia response capacity about the control parameters and the grid impedance; and $f_2(x)$ is a function relation formula of the system inertia response speed about the control parameters and the grid impedance; $f_3(x)$ is a function relation formula of the system reactive control response speed about the control parameters and the grid impedance; $a_{10}$, $a_{11}$, $a_{12}$, ..., $a_{1n}$, $a_{20}$, $a_{21}$, $a_{22}$, ..., $a_{2n}$, and $a_{30}$, $a_{31}$, $a_{32}$, ....., $a_{3n}$ are coefficients of the control parameters in the relation formulae;
step 11.2: a function of the system control parameters about the grid impedance and the system inertia response capacity, the system inertial response speed, and the system reactive response speed performance index is established according to the above function relation, where an expression of the function can be written as:

$$\begin{bmatrix} a_{11} & a_{12} & \cdots & a_{1n} \\ a_{21} & a_{22} & \cdots & a_{2n} \\ a_{31} & a_{32} & \cdots & a_{3n} \end{bmatrix} \begin{bmatrix} P_{r1} \\ P_{r2} \\ \cdots \\ P_m \end{bmatrix} = \begin{bmatrix} IT_c - a_{10}Z_g \\ IT_t - a_{20}Z_g \\ Q_t - a_{30}Z_g \end{bmatrix}$$

step 11.3: an amplitude of a numerical value of the grid impedance is acquired in real time through grid impedance identification, and a multi-cluster numerical value solution set $\{P_{ri}(1)\},...,\{P_{ri}(m)\}$ of the system control parameters is solved according to the system inertia response capacity, the system inertial response speed, and the system reactive speed performance index;
step 11.4: a function relation among a system phase angle stability margin and the system control parameters, and the grid impedance is established, where an expression of the function relation is as follows:

$$PM = g(Z_g, P_{r1}, P_{r2}, \cdots, P_m) = g[Z_g, \{P_{ri}\}]$$

where $PM$ is the system phase angle stability margin;
step 11.5: the multi-cluster analytical expressions $\{P_{ri}(1)\},...,\{P_{ri}(m)\}$ of the system control parameters obtained in step 10.3 are sequentially substituted into the system margin function, and a performance function $per$ of the self-synchronized voltage source conversion wind power generation unit is defined as:

$$per = \max(g[Z_g, \{P_{ri}(1)\}], g[Z_g, \{P_{ri}(2)\}], ..., g[Z_g, \{P_{ri}(m)\}])$$

step 11.6: in a case that the performance function $per$ is the maximum value, the stability margin of the self-synchronized voltage source full power conversion wind power generation unit is optimal in the current grid working condition, and corresponding solutions of one group of control parameters are taken as current system control parameters.

Those skilled in the art shall know that except in form of a pure way of a computer readable program code to implement the system, device and modules thereof provided by the present invention, the system, device and modules thereof provided by the present invention can implement the same program in form of a logic gate, a switch, an application-specific integrated circuit, a programmable logic controller, an embedded microcontroller and the like fully by logically programming the method steps. Therefore, the system, device and modules thereof provided by the present invention are considered a hardware part and modules of various programs included therein are also considered structures in the hardware part. Modules for implementing various functions can be also considered software programs that implement the method and the structures in the hardware part.

Specific embodiments of the present invention are described above. It is needed to understand that the present invention is not limited to the specific embodiments, and those skilled in the art can make various variations or modifications within the scope of the claims without affecting the substantial contents of the present invention. In the absence of conflict, the embodiments of the application and features in the embodiments can be combined with one another arbitrarily.

**Claims**

1. A control system for a self-synchronized voltage source full power conversion wind power generation unit, comprising: a start control module, configured to implement non-impact current flexible grid-connected start control of the self-synchronized voltage source full power conversion wind power generation unit; a steady state control module, configured to implement voltage source control of the full power conversion wind power generation unit in a non-fault state of a power grid; a transient state control module, configured to implement voltage source control of the full power conversion wind power generation unit in a fault state of the power grid; a steady state and transient state switching module, configured to seamlessly switch between a steady state operation mode and a transient state operation mode of the self-synchronized voltage source full power conversion wind power generation unit; an asymmetric current control module, configured to implement negative-sequence current control of the full power conversion wind power generation unit under an asymmetric power grid; a harmonic current control module, configured to implement harmonic current control of the full power conversion wind power generation unit under a background harmonic power grid; and a grid impedance adaptive control module, configured to implement grid impedance adaptive control of the full power conversion wind power generation unit in power grid access scenarios at different short-circuit ratios.

2. A start control method for a self-synchronized voltage source full power conversion wind power generation unit, using the control system for a self-synchronized voltage source full power conversion wind power generation unit according to claim 1, and comprising the following steps:

step 2.1: connecting a breaker $BRK_1$, charging a direct current side capacitor through a pre-charging resistor $R_c$ and a diode rectifier of a grid side converter, disconnecting the $BRK_1$ after a direct current side voltage reaches a preset value, disconnecting a pre-charging circuit, and connecting a breaker $BRK_2$;

step 2.2: placing switches S1, S2, and S3 at a preset position 1, enabling a drive pulse $S_g$ of the grid side converter, and in this case, respectively setting a modulating voltage and a phase angle of the grid side converter as:

$$\begin{cases} U_t = U_{t0} \\ \theta_{vsc} = \theta_p \end{cases}$$

wherein $U_t$ is an amplitude of the modulating voltage of the grid side converter, $\theta_{vsg}$ is a phase angle of the modulating voltage of the grid side converter of the wind power generation unit; $U_{t0}$ is an amplitude of an outlet voltage of the grid side converter of the wind power generation unit; and $\theta_p$ is a phase angle of the outlet voltage of the grid side converter of the wind power generation unit;

step 2.3: placing the switch S1 at a preset position 2, and the switches S2 and S3 at the preset position 1, inputting a difference between an actual value and a reference value of the direct current voltage into a direct current voltage controller 1, taking a sum of an output of the direct current voltage controller 1 and an output phase of a phase-locked loop as a phase of the modulating voltage 1 of the grid side converter, and in this case, respectively setting the modulating voltage and the phase angle of the grid side converter as:

$$\begin{cases} U_t = U_{t0} \\ \theta_{vsg} = \theta_p + \left( k_{pdc1} + \dfrac{k_{idc1}}{s} \right)\left( U_{dc} - U_{dcref} \right) \end{cases}$$

wherein $k_{pdc1}$ and $k_{idc1}$ are respectively a proportionality coefficient and an integration coefficient of the direct current voltage controller 1;

step 2.4: in a case that the direct current voltage reaches the set value, placing the switches S2 and S3 at the preset position 2, and inputting a deviation between an actual value and a given value of a direct current bus voltage into a voltage regulator 2 of the direct current bus to obtain a synchronous phase angle 2 of the grid side converter, wherein an implementing formula of a control policy is as follows:

$$\theta_{vsg} = \frac{1 + T_1 s}{s(1 + T_2 s)}(U_{dc} - U_{dcref})$$

wherein $\theta_{vsg}$ is the synchronous phase angle 2 of the grid side converter; and $T_1$ and $T_2$ are time constants of the direct current voltage regulator;

step 2.5: subjecting the deviation between the actual value and the given value of the direct current bus voltage to a stabilizing controller to obtain a stabilizing control compensation quantity of the output voltage of the converter, inputting a difference between a given value of reactive power and an actual value of the reactive power into a reactive power regulator, and adding an output of the reactive power regulator with a voltage reference value and the stabilizing control compensation quantity to obtain an amplitude of the output voltage 2 of the converter, wherein an implementing formula of the control policy is as follows:

$$\begin{cases} U_t = U_{t0} + \left( k_{pq} + \dfrac{k_{iq}}{s} \right)(Q_{gref} - Q_g) + D_{pss} \\ D_{pss} = k_{pss}(U_{dc} - U_{dcref}) \end{cases}$$

wherein $Q_{gref}$ and $Q_g$ are respectively an instruction value and an actual value of the reactive power; $D_{pss}$ is the stabilizing control compensation quantity of the output voltage of the grid side converter; $k_{pss}$ is a stabilizing control coefficient; and $k_{pq}$ and $k_{iq}$ are respectively a proportionality coefficient and an integration coefficient of the reactive power regulator;

wherein the instruction value of the reactive power is obtained by the difference between the given value and the actual value of the amplitude of an output alternating current voltage of the power grid converter through an alternating current voltage regulator, and an expression thereof is as follows:

$$Q_{gref} = k_{pu}\left(U_0 - U_{om}\right)$$

wherein $U_o$ is the given value of the amplitude of the output alternating current voltage of the grid side converter; $U_{om}$ is the actual value of the amplitude of the output alternating current voltage of the grid side converter; and $k_{pu}$ is a proportionality coefficient of the alternating current voltage regulator; and

step 2.6: obtaining a three-phase voltage value under a static coordinate system from the instruction value $U_t$ and the synchronous phase angle $\theta_{vsg}$ of the modulating voltage of the grid side converter, and subjecting the three-phase voltage value to pulse width vector modulation to obtain a trigger signal $S_g$ of the grid side converter.

3. A steady state control method for a grid side converter of a self-synchronized voltage source full power conversion wind power generation unit, using the control system for a self-synchronized voltage source full power conversion wind power generation unit according to claim 1, and comprising the following steps:

step 4.1: inputting a three-phase alternating current voltage $U_{oabc}$ and a three-phase alternating current $I_{fabc}$ of an output port of the grid side converter, and the synchronous angle $\theta_{vsg}$ of the grid side converter into a rotational coordinate transformation formula to obtain a d axis component and a q axis component of inputs of the three-phase alternating current voltage $U_{oabc}$ and the three-phase alternating current $I_{fabc}$, and calculating real-time values of instantaneous active power $P_g$ and reactive power $Q_g$ of the grid side converter according to the three-phase alternating current voltage $U_{oabc}$ and a three-phase alternating current $I_{fabc}$;

step 4.2: inputting a deviation between an actual value and a given value of a direct current bus voltage into a direct current bus voltage regulator, and adding the output of the direct current voltage regulator and an angle frequency reference value of the power grid to obtain a synchronous angle frequency of the grid side converter, wherein an implementing formula of a control policy is as follows:

$$\omega_{\mathrm{syn}} = \omega_0 + G(s)(U_{\mathrm{dc}} - U_{\mathrm{dcref}})$$

wherein $\omega_{\mathrm{syn}}$ is the synchronous angle frequency of the grid side converter; $\omega_0$ is a rated value of the angle frequency of the power grid; $T_1$ and $T_2$ are time constants of the direct current voltage regulator; $U_{\mathrm{dc}}$ and $U_{\mathrm{dcref}}$ are the actual value and the given value of the direct current bus voltage; and $G(s)$ is a transfer function of the direct current bus voltage regulator, and an expression thereof is as follows:

$$G(s) = \frac{1 + T_1 s}{s(1 + T_2 s)}$$

step 4.3: integrating the synchronous angle frequency of the grid side converter to obtain a synchronous phase angle $\theta_{\mathrm{vsg}}$ of the grid side converter, wherein an expression thereof is as follows:

$$\theta_{\mathrm{vsg}} = \frac{1}{s} \omega_{\mathrm{syn}}$$

step 4.4: subjecting the deviation $\Delta U_{\mathrm{dc}}$ between the actual value and the given value of the direct current bus voltage to a stabilizing controller to obtain a stabilizing control compensation quantity of the output voltage of the converter, wherein an implementing formula thereof is as follows:

$$D_{\mathrm{pss}} = k_{\mathrm{pss}}(U_{\mathrm{dc}} - U_{\mathrm{dcref}})$$

wherein $k_{\mathrm{pss}}$ is a stabilizing control coefficient;
step 4.5: subjecting the difference between the given value and the actual value of an amplitude of an output alternating current voltage of the power grid converter to an alternating current voltage regulator to obtain an instruction value of a reactive power, wherein an expression of a control policy is as follows:

$$Q_{\mathrm{gref}} = k_{\mathrm{pu}}\left(U_0 - U_{\mathrm{om}}\right)$$

wherein $U_{\mathrm{o}}$ is the given value of the amplitude of the output alternating current voltage of the grid side converter; $U_{\mathrm{om}}$ is the actual value of the amplitude of the output alternating current voltage of the grid side converter; and $k_{\mathrm{pu}}$ is a proportionality coefficient of the alternating current voltage regulator;
step 4.6: inputting a difference between a given value of the reactive power and an actual value of the reactive power into a reactive power regulator, and adding the output of the reactive power regulator with a voltage reference value and the stabilizing control compensation quantity to obtain an amplitude of an output voltage reference value of the converter, wherein an implementing formula of the control policy is as follows:

$$U_{\mathrm{t}} = U_{\mathrm{t0}} + \left(k_{\mathrm{pq}} + \frac{k_{\mathrm{iq}}}{s}\right)(Q_{\mathrm{gref}} - Q_{\mathrm{g}}) + D_{\mathrm{pss}}$$

wherein $U_{\mathrm{t}}$ is the amplitude of the output voltage reference value of the grid side converter; $U_{\mathrm{t0}}$ is an amplitude of a rated voltage of the power grid; $k_{\mathrm{pq}}$ and $k_{\mathrm{iq}}$ are respectively a proportionality coefficient and an integration coefficient of the reactive power regulator; $Q_{\mathrm{gref}}$ and $Q_{\mathrm{g}}$ are respectively an instruction value and an actual value of the reactive power; and $D_{\mathrm{pss}}$ is the stabilizing control compensation quantity of the output voltage of the grid side converter;
step 4.7: using the amplitude of the output voltage reference value of the grid side converter as a d axis instruction value of an output voltage inner loop, setting a q axis instruction value of the output voltage inner loop of the grid side converter as 0, subjecting a difference between the d axis instruction value and an actual value of the d axis voltage of the voltage inner loop of the grid side converter to a virtual impedance link to obtain a d axis current instruction, and subjecting a difference between the q axis instruction value and the q axis voltage of the voltage inner loop of the grid side converter to the virtual impedance link to obtain a q axis current instruction, wherein an implementing formula of the control policy is as follows:

$$\begin{cases} I_{\text{dref}} = \dfrac{U_{\text{td}} - U_{\text{od}}}{L_{\text{v}}s + R_{\text{v}}} \\[3mm] I_{\text{qref}} = \dfrac{U_{\text{tq}} - U_{\text{oq}}}{L_{\text{v}}s + R_{\text{v}}} \end{cases}$$

wherein $U_{\text{td}}$ and $U_{\text{tq}}$ are respectively the d axis and q axis instruction values of the voltage inner loop of the grid side converter, and there are $U_{\text{td}} = U_{\text{t}}$ and $U_{\text{tq}} = 0$; $U_{\text{od}}$ and $U_{\text{oq}}$ are respectively d axis and q axis voltages of a port of the grid side converter; $I_{\text{dref}}$ and $I_{\text{qref}}$ are respectively d axis and q axis current instruction values; and $L_{\text{v}}$ and $R_{\text{v}}$ are respectively a virtual inductance and a virtual resistance value of the virtual impedance link;

step 4.8: subjecting a difference between the d axis instruction value and the d axis current of a current inner loop of the grid side converter to a PI regulator to obtain a d axis modulating voltage instruction value, subjecting a difference between the q axis instruction value and the q axis current of the current inner loop of the grid side converter to the PI regulator to obtain a q axis modulating voltage instruction value, wherein an implementing formula of a control policy is as follows:

$$\begin{cases} U_{\text{std}} = (k_{\text{pi}} + \dfrac{k_{\text{ii}}}{s})(I_{\text{dlref}} - I_{\text{fd}}) - \omega_{\text{g}}L_{\text{f}}I_{\text{fq}} + U_{\text{od}} \\[3mm] U_{\text{stq}} = (k_{\text{pi}} + \dfrac{k_{\text{ii}}}{s})(I_{\text{qlref}} - I_{\text{fq}}) + \omega_{\text{g}}L_{\text{f}}I_{\text{fd}} + U_{\text{oq}} \end{cases}$$

wherein $U_{\text{std}}$ and $U_{\text{stq}}$ are respectively the d axis and q axis modulating voltage instruction values; $I_{\text{fd}}$ and $I_{\text{fq}}$ are respectively the d axis and q axis currents outputted by the grid side converter; $L_{\text{f}}$ is converter side filter inductance; $\omega_{\text{g}}$ is the angle frequency of the power grid; and $k_{\text{pi}}$ and $k_{\text{ii}}$ are respectively a current loop proportion and an integration coefficient; and

step 4.9: subjecting the instruction value of the modulating voltage of the grid side converter to a synchronous phase angle $\theta_{\text{vsg}}$ to obtain a three-phase voltage value under a static coordinate system, and subjecting the three-phase voltage value to pulse width vector modulation to obtain a trigger signal of the grid side converter.

4. A steady state control method for a unit side converter of a self-synchronized voltage source full power conversion wind power generation unit, using the control system for a self-synchronized voltage source full power conversion wind power generation unit according to claim 1, and comprising the following steps:

step 5.1: inputting a three-phase alternating current $I_{\text{sabc}}$ outputted by the unit side converter and a rotor angle $\theta_{\text{r}}$ of a generator into a rotational coordinate transformation formula to obtain a d axis component and a q axis component inputted by the three-phase alternating current $I_{\text{sabc}}$, and calculating real-time values of instantaneous active power $P_{\text{s}}$ and reactive power $Q_{\text{s}}$ of the unit side converter according to a three-phase alternating current voltage $U_{\text{sabc}}$ and a three-phase alternating current $I_{\text{sabc}}$;

step 5.2: looking up a rotating speed-power table according to a current rotating speed of a wind turbine to obtain a maximum output power $P_{\text{WT}}$ of the wind power generation unit, subjecting a difference between a synchronous angle frequency outputted by a grid side converter and a rated angle frequency of the power grid to a proportional-resonant controller to obtain inertia response power $\Delta P$ of the unit side converter, so as to further obtain a power instruction value of the wind power generation unit, wherein an implementing formula of the power instruction value is as follows:

$$P_{\text{sref}} = P_{\text{WT}} - \Delta P = P_{\text{WT}} + \left( k_{\text{c}} + \frac{2k_{\text{s}}\xi\omega_{\text{c}}s}{s^2 + 2\xi\omega_{\text{c}}s + \omega_{\text{c}}^2} \right)\left( \omega_{\text{syn}} - \omega_0 \right)$$

wherein $P_{\text{sref}}$ is a reference value of a power link; $P_{\text{WT}}$ is the maximum output power of the wind power generation unit; $\Delta P$ is the inertia response power; $k_{\text{c}}$ is a proportionality coefficient of the proportional-resonant controller; $k_{\text{s}}$ is a gain of the proportional-resonant controller at a resonant frequency; $\zeta$ is a damping coefficient of the proportional-resonant controller; and $\omega_{\text{c}}$ is a resonant angle frequency;

step 5.3: inputting a difference between a given value of reactive power and an actual value of the reactive power of the unit side converter into a reactive power regulator, and using an output value of the active power regulator as a q axis current instruction value of the unit side converter, wherein an implementing formula of a control policy is as follows:

$$I_{sqref} = \left(k_{pp} + \frac{k_{ip}}{s}\right)(P_{sref} - P_s)$$

$P_{sref}$ and $P_s$ are respectively the instruction value and the actual value of the output power of the wind power generation unit; and $k_{pp}$ and $k_{ip}$ are the proportionality coefficient and the integration coefficient of the reactive power regulator;

step 5.4: subjecting a difference between the d axis instruction value and the d axis actual value of a current inner loop of the unit side converter to a PI regulator to obtain a d axis modulating voltage instruction value, subjecting a difference between the q axis instruction value and the q axis actual value of the current inner loop of the unit side converter to the PI regulator to obtain a q axis modulating voltage instruction value, wherein an implementing formula of a control policy is as follows:

$$\begin{cases} U_{sd} = (k_{pi\_m} + \dfrac{k_{ii\_m}}{s})(I_{sdref} - I_{sd}) - n_p \omega_m L_{sq} I_{sq} \\ U_{sq} = (k_{pi\_m} + \dfrac{k_{ii\_m}}{s})(I_{sqref} - I_{sq}) + n_p \omega_m L_{sd} I_{sd} + n_p \omega_m \psi_r \end{cases}$$

wherein $U_{sd}$ and $U_{sq}$ are respectively d axis and q axis modulating voltage instruction values; $I_{sd}$ and $I_{sq}$ are respectively d axis and q axis currents outputted by the unit side converter; $L_{sd}$ and $L_{sq}$ are d axis and q axis inductance of the generator; $\omega_m$ is a mechanical angle frequency of a rotor of the generator; $n_p$ is a number of pole-pairs of the generator; $\Psi_r$ is a rated flux linkage of the generator; and $k_{pi\_m}$ and $k_{ii\_m}$ are a current loop proportion and an integration coefficient of the unit side converter; and

step 5.5: subjecting the modulating voltage instruction value of the unit side converter and the rotor angle $\theta_r$ to rotational coordinate inverse transformation to obtain a three-phase voltage value under a static coordinate system, and subjecting the three-phase voltage value to pulse width vector modulation to obtain a trigger signal of the unit side converter.

5. A primary frequency modulation control method for a self-synchronized voltage source full power conversion wind power generation unit, using the control system for a self-synchronized voltage source full power conversion wind power generation unit according to claim 1, and comprising the following steps:

step 6.1: inputting a difference between an actual value and instruction value of an active power of the wind power generation unit into a power controller to obtain a pitch angle set value, wherein an implementing formula of a control policy is as follows:

$$\beta_s = (k_{ppj} + \frac{k_{ipj}}{s})(P_s - P_{sref})$$

wherein $\beta_s$ is the pitch angle set value; $P_{sref}$ and $Ps$ are respectively the instruction value and the actual value of the active power of the wind power generation unit; a compensation value; and $k_{ppj}$ and $k_{ipj}$ are a proportionality coefficient and an integration coefficient of the power controller;

step 6.2: inputting a difference between a synchronous angle frequency outputted by the grid side converter and the rated angle frequency of the power grid into a primary frequency modulation regulator, and adding an output of the primary frequency modulation regulator and the pitch angle preset set to obtain a pitch angle compensation value, wherein an implementing formula of a control policy is as follows:

$$\Delta\beta = \beta_0 + k_{pb}\left(\omega_{syn} - \omega_0\right)$$

wherein $\beta_0$ is the pitch angle set value; $\Delta\beta$ is the pitch angle compensation value; and $k_{pb}$ is a proportionality coefficient of the primary frequency modulation controller; and

step 6.3: sending a sum of the pitch angle set value and the pitch angle compensation value as a pitch angle instruction value to a variable pitch controller to control the pitch angle of the wind power generation unit to realize a primary frequency modulation function of the unit.

6. A transient control method for a self-synchronized voltage source full power conversion wind power generation unit, using the control system for a self-synchronized voltage source full power conversion wind power generation unit according to claim 1, comprising the following steps:

step 7.1: in a case that a direct current voltage is greater than $k_a * U_{dcref}$, an unloading circuit acting, controlling a direct current bus voltage by using a PI regulator, and comparing an output value of the regulator with a PWM generator to generate a high frequency pulse signal to control the unloading circuit to work, wherein an implementing formula of a control policy is as follows:

$$u_{cp} = (k_{pc} + \frac{k_{ic}}{s})(U_{dc} - k_a U_{dcref})$$

wherein $u_{cp}$ is an output of an unloading circuit controller; $k_{pc}$ and $k_{ic}$ are respectively an unloading control loop proportionality coefficient and an integration coefficient; and $k_a$ is a direct current voltage unloading action coefficient;

step 7.2: inputting a difference between an instruction value and an actual value of an active power into a virtual synchronous controller, adding an output of the virtual synchronous controller with an angle frequency reference value to obtain an output angle frequency of the grid side converter, and integrating the output angle frequency of the grid side converter to obtain asynchronous phase angle of the grid side converter, wherein an implementing formula of a control policy is as follows:

$$\begin{cases} \omega_{syn} = \omega_0 + \dfrac{1}{Js + D}(P_{ref} - P_g) \\ \theta_{syn} = \dfrac{1}{s}\omega_{syn} \end{cases}$$

wherein $P_{ref}$ and $P_g$ are respectively the instruction value and the actual value of the active power; and $J$ and $D$ are respectively a virtual inertia and a virtual damping;

step 7.3: inputting a difference between a given value of reactive power and an actual value of the reactive power into a reactive power regulator, and adding an output of a reactive power regulator with a voltage reference value to obtain an amplitude of an output voltage reference value of a converter, wherein an implementing formula of a control policy is as follows:

$$U_t = U_0 + \left(k_{pq} + \frac{k_{iq}}{s}\right)(Q_{gref} - Q_g)$$

step 7.4: subjecting an error between the d axis and q axis instruction values and the actual values of output voltages of the grid side converter to an adaptive virtual impedance link to obtain the d axis and q axis instruction values of output currents of the grid side converter, wherein an expression of the adaptive virtual impedance link is as follows:

$$\begin{cases} L_{v\_ft} = \dfrac{\sqrt{I_{dref}^2 + I_{qref}^2}}{I_{lim}} L_v \\ R_{v\_ft} = \dfrac{\sqrt{I_{dref}^2 + I_{qref}^2}}{I_{lim}} R_v \end{cases}$$

$L_{v\_ft}$ and $R_{v\_ft}$ are respectively a virtual inductance value and a virtual resistance value of the adaptive virtual impedance link;

step 7.5: obtaining an expression of the d axis and q axis instruction values of the output currents of the grid side converter in the adaptive virtual impedance link as follows:

$$I_{\text{dlref}} = \begin{cases} I_{\text{dref}} \dfrac{I_{\text{lim}}}{\sqrt{I_{\text{dref}}^2 + I_{\text{qref}}^2}}, & \sqrt{I_{\text{dref}}^2 + I_{\text{qref}}^2} > I_{\text{lim}} \\[3mm] I_{\text{dref}}, & \sqrt{I_{\text{dref}}^2 + I_{\text{qref}}^2} \leq I_{\text{lim}} \end{cases}$$

$$I_{\text{qlref}} = \begin{cases} I_{\text{qref}} \dfrac{I_{\text{lim}}}{\sqrt{I_{\text{dref}}^2 + I_{\text{qref}}^2}}, & \sqrt{I_{\text{dref}}^2 + I_{\text{qref}}^2} > I_{\text{lim}} \\[3mm] I_{\text{qref}}, & \sqrt{I_{\text{dref}}^2 + I_{\text{qref}}^2} \leq I_{\text{lim}} \end{cases}$$

wherein $I_{\text{dlref}}$ and $I_{\text{qlref}}$ are respectively d axis and q axis current instruction values after amplitude limitation; and $I_{\text{lim}}$ is a maximum allowed output current amplitude;

step 7.6: setting an instruction value of an apparent power and the instruction value of the active power according to a drop depth of a voltage of the power grid, wherein an expression of the apparent power instruction value is as follows:

$$S_{\text{new}} = \frac{3\sqrt{2}}{2} U_{\text{orms}} \sqrt{I_{\text{dlref}}^2 + I_{\text{qlref}}^2}$$

wherein $S_{\text{new}}$ is the maximum apparent power that can be sent in a fault period; and $U_{\text{orms}}$ is an effective value of a voltage of a port of the wind power generation unit; and

an expression of the instruction value of the active power is as follows:

$$P_{\text{gref}} = \sqrt{S_{\text{new}}^2 - Q_{\text{gref}}^2}$$

step 7.7: shielding, by the unit side converter, an inertia response function during a transient fault of the power grid, wherein the power of the wind power generation unit is obtained by looking up a rotating speed-power table according to a current rotating speed of the wind turbine.

7. A transient state and steady state switch control method for a self-synchronized voltage source full power conversion wind power generation unit, using the control system for a self-synchronized voltage source full power conversion wind power generation unit according to claim 1, and comprising the following steps:

step 8.1: in a case that an alternating current voltage fault incident F1 and a direct current voltage abnormal incident F2 are detected at the same time and a transient state and steady state switch control signal FT of the self-synchronized voltage source full power conversion wind power generation unit, executing a fault ride-through control policy, wherein a fault signal $F_1$ is used to judge an alternating current voltage fault, and an expression is as follows:

$$F_1 = \begin{cases} 1, & U_{\text{orms}} < a_1 U_m \\ 0, & U_{\text{orms}} > a_2 U_m \end{cases}$$

wherein $a_1$ and $a_2$ are respectively logical determining proportionality factors of the alternating current voltage; the fault signal $F_2$ is used to determine a direct current voltage abnormality, wherein an expression is as follows:

$$F_2 = \begin{cases} 1, & U_{\text{dc}} > b_1 U_{\text{dc0}} \\ 0, & U_{\text{dc}} < b_2 U_{\text{dc0}} \end{cases}$$

wherein $b_1$ and $b_2$ are respectively logical determining proportionality factors of the alternating current voltage; the transient state and steady state switch control signal FT is integrally generated by the fault signals $F_1$ and $F_2$:

$$FT = F_1 \,\&\, F_2$$

step 8.2: in a case that the transient state and steady state control signal *FT* is invalid, using a direct current voltage in a synchronization link for synchronization; in a case that the transient state and steady state switch control signal *FT* is valid, using a power synchronous control mode in the synchronization link; performing switching in the synchronization link of the grid side converter at a synchronous frequency position to guarantee that an output phase angle of the grid side converter does not mutate, to effectively avoid an impact in the switch process, wherein an implementing formula of a control policy is as follows:

$$\omega_{\text{syn}} = \begin{cases} \dfrac{1+T_1 s}{s(1+T_2 s)}(U_{\text{dc}} - U_{\text{dcref}}) + \omega_0, FT = 0 \\ \dfrac{1}{Js+D}(P_{\text{gref}} - P_{\text{g}}) + \omega_0, FT = 1 \end{cases}$$

step 8.3: in a case that the transient state and steady state switch control signal *FT* is invalid, determining that the stabilizing control compensation amount added to the modulating voltage of the grid side converter is valid; in a case that the transient state and steady state switch control signal *FT* is valid, determining that the stabilizing control compensation amount added to the modulating voltage of the grid side converter is 0, that is, the stabilizing control compensation amount is only used to improve the stability of a control system of the grid side converter in the steady state, which is 0 in the transient state, and an implementing formula of a control policy is as follows:

$$D_{\text{pss}} = \begin{cases} k_{\text{pss}}(U_{\text{dc}} - U_{\text{dcref}}), FT = 0 \\ 0, \quad FT = 1 \end{cases}$$

step 8.4: in a case that the transient state and steady state switch control signal *FT* is invalid, responding, by the wind power generation, to a power grid frequency incident, wherein the inertia response function is valid; in a case that the transient state and steady state switch control signal *FT* is valid, skipping responding, by the wind power generation unit, to a power grid frequency incident, wherein an additional inertia response power is 0, that is, the frequency response control link of the unit side converter is locked in a transient operation mode, and an implementing formula of inertia response control is as follows:

$$\Delta P = \begin{cases} \left(k_{\text{c}} + \dfrac{2k_{\text{s}}\omega_{\text{a}} s}{s^2 + 2\omega_{\text{a}} s + \omega^2}\right)(\omega_{\text{syn}} - \omega_0), FT = 0 \\ 0, \quad FT = 1 \end{cases} .$$

8. An asymmetrical output current control method for a self-synchronized voltage source full power conversion wind power generation unit, using the control system for a self-synchronized voltage source full power conversion wind power generation unit according to claim 1, and comprising the following steps:

step 9.1: using a synchronous phase angle of a grid side converter as a conversion angle, using one-quarter delay method to obtain a positive-sequence component and a negative-sequence component of a three phase alternating voltage and a three phase alternating current of the wind power generation unit;

step 9.2: obtaining a virtual active power and reactive power of the grid side converter through the d and q axis current instruction values $I_{\text{dlref}}$ and $I_{\text{qlref}}$ of the grid side converter after amplitude limitation and the d axis component and q axis component $U_{\text{od}}$ and $U_{\text{oq}}$ of the alternating current voltage of the wind power generation unit, and filtering out a double frequency component through a low-pass filter to obtain an instruction value $P_{\text{oref}}$ of an active power and an instruction value $Q_{\text{oref}}$ of a reactive power, wherein a calculating formula is as follows:

$$\begin{cases} P_{\text{oref}} = \dfrac{1}{1+T_3 s}(U_{\text{od}} I_{\text{dlref}} + U_{\text{oq}} I_{\text{qlref}}) \\ Q_{\text{oref}} = \dfrac{1}{1+T_3 s}(U_{\text{oq}} I_{\text{dlref}} - U_{\text{od}} I_{\text{qlref}}) \end{cases}$$

wherein $T_3$ is a time constant of the low-pass filter;

step 9.3: according to the active power instruction value and the reactive power instruction value, a positive-sequence d axis component and a positive-sequence q axis component $U_{odp}$ and $U_{oqp}$ and a negative-sequence d axis component and a negative-sequence q axis component $U_{odn}$ and $U_{oqn}$ of the alternating current voltage of the wind power generation unit, obtaining instruction values $I_{dpref}$, $I_{qpref}$, $I_{dnref}$, and $I_{qnref}$ of the positive-sequence and negative-sequence currents respectively according to control targets of inhibiting the negative-sequence current, fluctuation at a double frequency of the active power, and fluctuation at a double frequency of the reactive power;

under the control target of inhibiting the negative-sequence current, a calculating formula for the instruction value of the positive-sequence and negative-sequence currents is as follows:

$$
\begin{bmatrix} I_{dpref} \\ I_{qpref} \\ I_{dnref} \\ I_{qnref} \end{bmatrix} = \frac{2}{3\left(U_{odp}^2 + U_{oqp}^2\right)} \begin{bmatrix} U_{oqp} & -U_{odp} & 0 & 0 \\ U_{odp} & U_{oqp} & 0 & 0 \\ 0 & 0 & 0 & 0 \\ 0 & 0 & 0 & 0 \end{bmatrix} \begin{bmatrix} P_{oref} \\ Q_{oref} \\ 0 \\ 0 \end{bmatrix}
$$

under the control target of inhibiting the fluctuation at the double frequency of the active power, a calculating formula of the instruction value of the positive and negative-sequence current is as follows:

$$
\begin{bmatrix} I_{dpref} \\ I_{qpref} \\ I_{dnref} \\ I_{qnref} \end{bmatrix} = \frac{2P_{oref}}{3D_1} \begin{bmatrix} U_{odp} \\ U_{oqp} \\ -U_{odn} \\ -U_{oqn} \end{bmatrix} + \frac{2Q_{oref}}{3D_2} \begin{bmatrix} U_{oqp} \\ -U_{odp} \\ U_{oqn} \\ -U_{odn} \end{bmatrix}
$$

under the control target of inhibiting the fluctuation at the double frequency of reactive power, a calculating formula of the instruction value of the positive-sequence and negative-sequence currents is as follows:

$$
\begin{bmatrix} I_{dpref} \\ I_{qpref} \\ I_{dnref} \\ I_{qnref} \end{bmatrix} = \frac{2P_{oref}}{3D_2} \begin{bmatrix} U_{odp} \\ U_{oqp} \\ U_{odn} \\ U_{oqn} \end{bmatrix} + \frac{2Q_{oref}}{3D_1} \begin{bmatrix} U_{oqp} \\ -U_{odp} \\ -U_{oqn} \\ U_{odn} \end{bmatrix}
$$

wherein

$$
\begin{cases} D_1 = U_{odp}^2 + U_{oqp}^2 - U_{odn}^2 - U_{oqn}^2 \\ D_2 = U_{odp}^2 + U_{oqp}^2 + U_{odn}^2 + U_{oqn}^2 \end{cases}
$$

step 9.4: subjecting a difference between the positive-sequence d axis instruction value and the d axis current of a current inner loop of the grid side converter to a PI regulator to obtain an instruction value of a positive-sequence d axis modulating voltage, and subjecting a difference between the positive-sequence q axis instruction value and the q axis current of the current inner loop of the grid side converter to the PI regulator to obtain an instruction value of the positive-sequence d axis modulating voltage, wherein an implementing formula of a control policy is as follows:

$$
\begin{cases} U_{tdp} = (k_{pi\_p} + \dfrac{k_{ii\_p}}{s})(I_{dpref} - I_{fdp}) - \omega_g L_f I_{fqp} + U_{odp} \\ U_{tqp} = (k_{pi\_p} + \dfrac{k_{ii\_p}}{s})(I_{qpref} - I_{fqp}) + \omega_g L_f I_{fdp} + U_{oqp} \end{cases}
$$

wherein $U_{tdp}$ and $U_{tqp}$ are respectively instruction values of the positive-sequence d axis and q axis modulating voltage; $I_{fdp}$ and $I_{fqp}$ are respectively the positive-sequence d axis and q axis currents outputted by the grid side converter; $L_f$ is the converter side filter inductance; $\omega_g$ is the angle frequency of the power grid; $k_{pi\_p}$ and $k_{ii\_p}$ are respectively the proportionality coefficient and the integration coefficient of the positive-sequence current loop;

step 9.5: subjecting the difference between the negative-sequence d axis instruction value and the d axis current of the current inner loop of the grid side converter to the **PI** regulator to obtain the instruction value of the negative-sequence d axis modulating voltage, and subjecting the difference between the negative-sequence q axis instruction and the q axis current of the current inner loop of the grid side converter to the **PI** regulator to obtain the instruction value of the negative-sequence q axis modulating voltage, wherein an implementing formula of a control policy is as follows:

$$\begin{cases} U_{\text{tdn}} = (k_{\text{pi\_n}} + \dfrac{k_{\text{ii\_n}}}{s})(I_{\text{dnref}} - I_{\text{fdn}}) - \omega_{\text{g}} L_{\text{f}} I_{\text{fqn}} + U_{\text{odn}} \\ U_{\text{tqn}} = (k_{\text{pi\_n}} + \dfrac{k_{\text{ii\_n}}}{s})(I_{\text{qnref}} - I_{\text{fqn}}) + \omega_{\text{g}} L_{\text{f}} I_{\text{fdn}} + U_{\text{oqn}} \end{cases}$$

wherein $U_{\text{tdn}}$ and $U_{\text{tqn}}$ are respectively instruction values of the positive-sequence d axis and q axis modulating voltages; $I_{\text{fdn}}$ and $I_{\text{fqn}}$ are respectively the positive-sequence d axis and q axis currents outputted by the grid side converter; $L_{\text{f}}$ is the converter side filter inductance; $\omega_{\text{g}}$ is an angle frequency of the power grid; $k_{\text{pi\_n}}$ and $k_{\text{ii\_n}}$ are respectively the proportionality coefficient and the integration coefficient of a negative-sequence current loop;

step 9.6: inputting the positive-sequence d and q axis voltage and a phase angle $\theta_{\text{vsg}}$ of the grid side converter into a positive-sequence rotational coordinate system and the static coordinate system conversion formula, to obtain a positive-sequence three phase modulating voltage $U_{\text{tp}}$ of the grid side converter, and inputting the negative-sequence d and q axis voltage and the phase angle $\theta_{\text{vsg}}$ of the grid side converter into a negative-sequence rotational coordinate system and the static coordinate system conversion formula, to obtain a negative-sequence three phase modulating voltage $U_{\text{tn}}$ of the grid side converter; and

step 9.7: adding the positive-order three phase modulating voltage $U_{\text{tp}}$ with the negative-order three phase modulating voltage $U_{\text{tn}}$ as a modulating signal $U_{\text{tabc}}$ of the grid side converter, and subjecting the modulating signal to pulse width vector modulation to obtain a trigger signal of the grid side converter.

9. A harmonic current control method for a self-synchronized voltage source full power conversion wind power generation unit, using the control system for a self-synchronized voltage source full power conversion wind power generation unit according to claim 1, and comprising the following steps:

step 10.1: subjecting the d and q axis current instruction values $I_{\text{dref}}$ and $I_{\text{qref}}$ outputted by the voltage inner loop to a coordinate conversion formula of a rotational coordinate system to a two phase static coordinate system, and filtering a harmonic component by a multi-sequence line trap to obtain current instruction values $I_{\alpha\text{ref}}$ and $I_{\beta\text{ref}}$ under the two phase static coordinate, wherein an implementing formula of the current instruction values is as follows:

$$\begin{cases} I_{\alpha\text{ref}} = H(s)\left[ I_{\text{dref}} \cos\theta_{\text{vsg}} + I_{\text{qref}} \sin\theta_{\text{vsg}} \right] \\ I_{\beta\text{ref}} = H(s)\left[ I_{\text{dref}} \sin\theta_{\text{vsg}} + I_{\text{qref}} \cos\theta_{\text{vsg}} \right] \end{cases}$$

wherein $H(s)$ is a transfer function of the multi-sequence line trap, and an expression of the transfer function is as follows:

$$H(s) = \sum_{k=6\text{n}\pm1} \frac{s^2 + k^2\omega_{\text{o}}^2}{s^2 + 2\xi_{\text{f}}k\omega_{\text{o}}s + k^2\omega_{\text{o}}^2} \qquad n = 1, 2$$

wherein $k$ is a harmonic sequence, $k = 6n \pm 1$, where n is 1 and 2; and $\xi_{\text{f}}$ is a damping coefficient of the line trap;

step 10.2: controlling the output current of the grid side converter by using a multi-harmonic PR regulator to eliminate the harmonic component in the current, wherein an implementing formula of a control policy is as follows:

$$
\begin{cases}
U_{t\alpha} = \sum_{k=6n\pm1} (k_{pr} + \dfrac{k_{ir}s}{s^2 + \omega_{rk}^2})(I_{\alpha ref} - I_{f\alpha}) \\
U_{t\beta} = \sum_{k=6n\pm1} (k_{pr} + \dfrac{k_{ir}s}{s^2 + \omega_{ro}^2})(I_{\beta ref} - I_{f\beta})
\end{cases}
$$

wherein $U_{t\alpha}$ and $U_{t\beta}$ are respectively the instruction values of the $\alpha$ axis and $\beta$ axis modulating voltages; $I_{f\alpha}$ and $I_{f\beta}$ are respectively the $\alpha$ axis and $\beta$ axis currents outputted by the grid side converter; $\omega_{rk}$ is a harmonic angle frequency; and $k_{pr}$ and $k_{ir}$ are respectively a proportionality coefficient and an integration coefficient of a PR controller; and

step 10.3: subjecting the instruction values of the modulating voltages of the two phase static coordinate system of the grid side converter to a coordinate conversion formula of the two phase static coordinate system to a three phase static coordinate system to obtain a three phase voltage value under the static coordinate system, and subjecting the three phase voltage value to pulse width vector modulation to obtain a trigger signal of the grid side converter.

10. A grid impedance adaptive control method for a self-synchronized voltage source full power conversion wind power generation unit, using the control system for a self-synchronized voltage source full power conversion wind power generation unit according to claim 1, and comprising the following steps:

step 11.1: establishing a function relation among a system inertia response capacity, a system inertia response speed, and a system reactive control response speed performance index, and grid impedance and a system control parameter according to a control architecture of the self-synchronized voltage source full power conversion wind power generation unit, wherein the function relation is represented as:

$$
\begin{cases}
IT_c = f_1(Z_g, P_{r1}, P_{r2}, \cdots, P_m) = a_{10}Z_g + a_{11}P_{r1} + a_{12}P_{r1} + \cdots + a_{1n}P_m \\
IT_t = f_2(Z_g, P_{r1}, P_{r2}, \cdots, P_m) = a_{20}Z_g + a_{21}P_{r1} + a_{22}P_{r1} + \cdots + a_{2n}P_m \\
Q_t = f_3(Z_g, P_{r1}, P_{r2}, \cdots, P_m) = a_{30}Z_g + a_{31}P_{r1} + a_{32}P_{r1} + \cdots + a_{3n}P_m
\end{cases}
$$

wherein $Z_g$ is the grid impedance; $P_{rn}$ is the control parameter involved in a system control policy; $n$ is the number of the control policies; $IT_c$ is the system inertia response capacity; $IT_t$ is the system inertial response capacity; $Q_t$ is the system reactive control response speed; $f_1(x)$ is a function relation formula of the system inertia response capacity about the control parameters and the grid impedance; and $f_2(x)$ is a function relation formula of the system inertia response speed about the control parameters and the grid impedance; $f_3(x)$ is a function relation formula of the system reactive control response speed about the control parameters and the grid impedance; $a_{10}$, $a_{11}$, $a_{12}$, ..., $a_{1n}$, $a_{20}$, $a_{21}$, $a_{22}$,...,$a_{2n}$ and $a_{30}$, $a_{31}$, $a_{32}$,...,$a_{3n}$ are coefficients of the control parameters in the relation formulae;

step 11.2: establishing a function of the system control parameters about the grid impedance and the system inertia response capacity, the system inertial response speed, and the system reactive response speed performance index according to the above function relation, wherein an expression of the function is as follows:

$$
\begin{bmatrix}
a_{11} & a_{12} & \cdots & a_{1n} \\
a_{21} & a_{22} & \cdots & a_{2n} \\
a_{31} & a_{32} & \cdots & a_{3n}
\end{bmatrix}
\begin{bmatrix}
P_{r1} \\
P_{r2} \\
\cdots \\
P_m
\end{bmatrix}
=
\begin{bmatrix}
IT_c - a_{10}Z_g \\
IT_t - a_{20}Z_g \\
Q_t - a_{30}Z_g
\end{bmatrix}
$$

step 11.3: acquiring an amplitude of a numerical value of the grid impedance in real time through grid impedance identification, and solving a multi-cluster numerical value solution set $\{P_{ri}(1)\},...,\{P_{ri}(m)\}$ of the system control parameters according to the system inertia response capacity, the system inertial response speed, and the system reactive speed performance index;

step 11.4: establishing a function relation among a system phase angle stability margin and the system control parameters, and the grid impedance, wherein an expression of the function relation is as follows:

$$
PM = g(Z_g, P_{r1}, P_{r2}, \cdots, P_m) = g[Z_g, \{P_{ri}\}]
$$

wherein *PM* is the system phase angle stability margin;

step 11.5: sequentially substituting the multi-cluster analytical expressions $\{P_{ri}(1)\},...,\{P_{ri}(m)\}$ of the system control parameters obtained in step 10.3 into the system margin function, and defining a performance function *per* of the self-synchronized voltage source conversion wind power generation unit as:

$$per=\max(g[Z_g,\{P_{ri}(1)\}], g[Z_g,\{P_{ri}(2)\}],...,g[Z_g,\{P_{ri}(m)\}])$$

step 11.6: in a case that the performance function *per* is the maximum value, the stability margin of the self-synchronized voltage source full power conversion wind power generation unit being optimal in the current grid working condition, and taking corresponding solutions of one group of control parameters as current system control parameters.

FIG. 1

FIG. 2

FIG. 3a

FIG. 3b

FIG. 3c

FIG. 4

FIG. 5

FIG. 6

FIG. 7

```
┌─────────────────────────────────────────────┐
│   Establish a function relation between a    │
│    performance index and parameters          │
└─────────────────────────────────────────────┘
                        │
                        ▼
┌──────────────┐   ┌─────────────────────────────────────────────┐
│     Grid     │   │  Establish a matrix for control parameters and a│
│  impedance   │──▶│       system performance index              │
│identification│   └─────────────────────────────────────────────┘
└──────────────┘                    │
                                    ▼
               ┌─────────────────────────────────────────────┐
               │ Solve a multi-cluster numerical value solution set│
               │     of the system control parameter          │
               └─────────────────────────────────────────────┘
                                    │
                                    ▼
               ┌─────────────────────────────────────────────┐
               │ Establish a function relation between a system│
               │ phase angle stability margin and the parameters│
               └─────────────────────────────────────────────┘
                                    │
                                    ▼
               ┌─────────────────────────────────────────────┐
               │Establish a performance function and determine an│
               │    optimal value of a value function         │
               └─────────────────────────────────────────────┘
                                    │
                                    ▼
               ┌─────────────────────────────────────────────┐
               │     Output system control parameters         │
               └─────────────────────────────────────────────┘
```

FIG. 8

<div style="text-align:center">**INTERNATIONAL SEARCH REPORT**</div>

| | International application No. |
|---|---|
| | **PCT/CN2023/083595** |

| A. | CLASSIFICATION OF SUBJECT MATTER |
|---|---|
| | H02J3/38(2006.01)i;  H02J3/01(2006.01)i |

According to International Patent Classification (IPC) or to both national classification and IPC

| B. | FIELDS SEARCHED |
|---|---|

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT ENTXT ENTXTC DWPI WPABS CNKI IEEE: 风电, 微网, 控制, 启动, 暂态, 稳态, 模式, 切换, 不对称, 不平衡, 电压, 谐波, 阻抗, 自适应, 短路比, wind turbine, microgrid, control, startup, transient, steady, mode, switching, asymmetric, unbalance, voltage, harmonic, impedance, self-adaptive, short circuit ratio

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114977270 A (SHANGHAI JIAO TONG UNIVERSITY) 30 August 2022 (2022-08-30) claims 1-10, and description, paragraphs 6-323, and figures 1-8 | 1-10 |
| Y | CN 108270242 A (SHANGHAI QUNXING ELECTRIC POWER CO., LTD.) 10 July 2018 (2018-07-10) description, paragraphs 3-32, and figures 1-2 | 1 |
| Y | CN 101534065 A (ZHEJIANG UNIVERSITY) 16 September 2009 (2009-09-16) description, p. 3, paragraph 4 to p. 8, paragraph 4, and figures 1-4 | 1 |
| Y | CN 112039347 A (SHANGHAI JIAO TONG UNIVERSITY) 04 December 2020 (2020-12-04) description, paragraphs 2-170, and figures 1-16 | 1 |
| A | CN 107658904 A (ZHEJIANG UNIVERSITY) 02 February 2018 (2018-02-02) entire document | 1-10 |
| A | US 2019140569 A1 (GENERAL ELECTRIC COMPANY) 09 May 2019 (2019-05-09) entire document | 1-10 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 June 2023** | **30 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2023/083595** |

| Patent document cited in search report | | | Publication date (day/month/year) | Patent family member(s) | | | Publication date (day/month/year) |
| --- | --- | --- | --- | --- | --- | --- | --- |
| CN | 114977270 | A | 30 August 2022 | None | | | |
| CN | 108270242 | A | 10 July 2018 | None | | | |
| CN | 101534065 | A | 16 September 2009 | CN | 101534065 | B | 01 December 2010 |
| CN | 112039347 | A | 04 December 2020 | None | | | |
| CN | 107658904 | A | 02 February 2018 | None | | | |
| US | 2019140569 | A1 | 09 May 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811124760
- CN 202010769555